(19) Europäisches Patentamt
European Patent Office
Office européen des brevets

(11) Veröffentlichungsnummer: **0 472 081 B1**

(12) **EUROPÄISCHE PATENTSCHRIFT**

(45) Veröffentlichungstag der Patentschrift: **08.11.95**

(51) Int. Cl.[6]: **C08F 220/04**

(21) Anmeldenummer: **91113490.6**

(22) Anmeldetag: **12.08.91**

# (54) Carboxylgruppenhaltige Copolymerisate, ihre Herstellung und ihre Verwendung als Verdicker.

(30) Priorität: **18.08.90 DE 4026239**

(43) Veröffentlichungstag der Anmeldung:
**26.02.92 Patentblatt 92/09**

(45) Bekanntmachung des Hinweises auf die Patenterteilung:
**08.11.95 Patentblatt 95/45**

(84) Benannte Vertragsstaaten:
**AT BE CH DE ES FR GB IT LI SE**

(56) Entgegenhaltungen:
**EP-A- 0 173 109**
**EP-A- 0 197 635**
**DE-A- 3 735 141**

(73) Patentinhaber: **HOECHST AKTIENGESELLSCHAFT**

**D-65926 Frankfurt am Main (DE)**

(72) Erfinder: **Schafheutle, Markus Alexander, Dr. Dipl.-Chem.**
**Herderstrasse 31**
**W-6203 Hochheim (DE)**
Erfinder: **Becker, Paul Gerhard, Dr. Dipl.-Chem.**
**Talweg 22**
**W-6200 Wiesbaden (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 472 081 B1

## Beschreibung

Es sind bereits eine Reihe von Polymeren bekannt, die sich als Verdicker einsetzen lassen. Dabei können im wesentlichen drei Richtungen unterschieden werden, nämlich modifizierte natürliche Polysaccharide, wie Cellulose, Polyurethanblockcopolymerisate und Polyacrylate.

Was dabei die Polyurethan-Blockcopolymerisate anbelangt so zeichnen sich diese durch hohe Hydrolysebeständigkeit sowie annähernde newtonische Viskosität in wäßriger Lösung aus. Sie haben jedoch den Nachteil, daß sie bei sehr kleinem Schergefälle zu niederviskos sind, so daß wasserverdünnbare Latexfarben leicht absetzen. Weiterhin bewirken sie keinen guten Stand des feuchten Films und neigen in dicker Schicht zum Ablaufen.

Bei den Polyacrylatverdickern handelt es sich um Polyelektrolyte, die gleichzeitig Mikrogele sind. Sie zeigen in wäßriger Lösung Strukturviskosität, sodaß bei kleinen Schergefällen eine hochviskose Lösung vorliegt und bei hohen Schergefällen niedrige Viskosität. Ein Nachteil dieser Verdicker ist jedoch die große Anzahl von Carboxylgruppen, die sich auf die Wasserfestigkeit der fertigen Beschichtungen negativ auswirken.

Durch Einführen hydrophiler und gleichzeitig amphiphiler Seitenketten läßt sich, wie in der EP-Offenlegungsschrift 121 230 beschrieben, die Zahl der Carboxylgruppen reduzieren und somit die Wasserfestigkeit erhöhen. Die amphiphilen Seitenketten bestehen aus Estern polymerisierbarer Verbindungen und nichtionischen Tensiden. Sie werden in Mengen zwischen 0 und 30 Gew.-% in das Polyacrylat mit einpolymerisiert.

Die EP-OS 173 109 beschreibt einen Weg zur Verbesserung der Hydrolyseempfindlichkeit der Polyacrylate, in dem die OH-terminierten Tenside nicht in Form von Estern an die Polymerhauptkette gebunden werden, sondern über eine Urethanbindung.

Es wurde nun gefunden, daß das Einführen von Blockcopolyurethanseitenketten mit amphiphilen Eigenschaften und gegebenenfalls von zusätzlichen kurzkettigen, urethangruppenhaltigen Seitenketten in das Verdickerpolyacrylat die Viskosität der zu verdickenden Latexdispersion sehr stark erhöht und gleichzeitig die Strukturviskosität der Mikrogele in der verdickten Latexdispersion erhalten bleibt.

Die Erfindung betrifft daher ein carboxylgruppenhaltiges Copolymerisat mit Verdickerwirkung in wäßrigen Systemen, das eine Säurezahl von mindestens 43 mg KOH/g aufweist und das neben Einheiten, die sich von Carboxylgruppen aufweisenden Monomeren ableiten, auch Einheiten enthält, die sich von nichtionischen, gegebenenfalls amphiphilen Gruppen enthaltenden Monomeren sowie gegebenenfalls von vernetzenden Monomeren ableiten, dadurch gekennzeichnet, daß sich die Einheiten ableiten von

(a) urethangruppenhaltigen, einfach ethylenisch ungesättigten (Makro)monomeren der allgemeinen Formel (I)

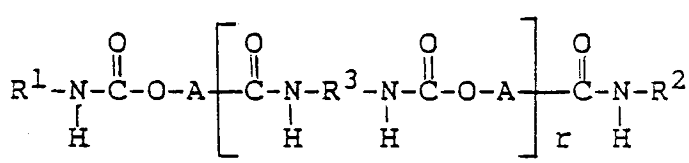

(I)

in der bedeuten

| | |
|---|---|
| $R^1$ und $R^2$ | unabhängig voneinander einen gesättigten Kohlenwasserstoffrest mit 3 bis 25 C-Atomen, der gegebenenfalls auch Heteroatome oder Gruppen mit Heteroatomen enthalten kann, oder einen einfach ethylenisch ungesättigten Kohlenwasserstoffrest mit bis 15 C-Atomen, der Heteroatome oder Gruppen mit Heteroatomen enthalten kann, mit der Maßgabe, daß einer der beiden Reste $R^1$ oder $R^2$ einfach ethylenisch ungesättigt ist, |
| $R^3$ | einen zweiwertigen, gesättigten Kohlenwasserstoffrest mit 1 bis 30 C-Atomen, der gegebenenfalls Heteroatome oder Gruppen mit Heteroatomen enthalten kann, vorzugsweise einen Alkylenrest mit 1 bis 25 C-Atomen, einen Arylenrest mit 6 bis 12 C-Atomen oder einen Arylalkylidenrest mit 6 bis 30 C-Atomen, |
| A | den Rest |

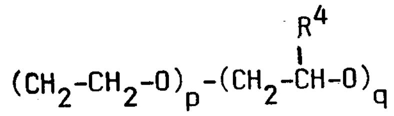

in dem $R^4$ ($C_1$-$C_6$)-Alkyl, vorzugsweise Methyl, bedeuten und p eine Zahl von 2 bis 300, vorzugsweise 10 bis 100 und q eine Zahl von 0 bis 300, vorzugsweise 0 bis 10 darstellen,

r eine Zahl von 0 bis 10, vorzugsweise 0 oder 1,

und/oder

(b) urethangruppenhaltige, mehrfach ungesättigte (Makro)monomeren der allgemeinen Formel (II)

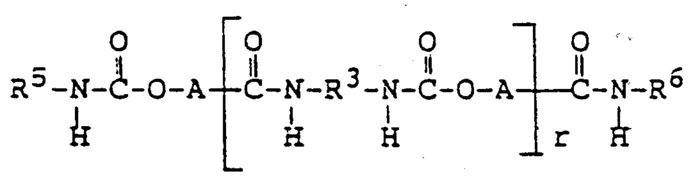

(II)

in der

$R^3$, A und r die vorstehende Bedeutung gemäß Formel (I) haben und

$R^5$ und $R^6$ unabhängig voneinander jeweils für einen einfach ethylenisch ungesättigten Kohlenwasserstoffrest mit 3 bis 15 C-Atomen stehen, der Heteroatome oder Gruppen mit Heteroatomen enthalten kann

und/oder

c) urethangruppenhaltige Monomere der Formel (III)

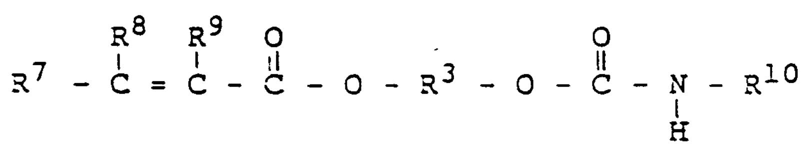

(III)

in der bedeuten

$R^3$ gleiche Bedeutung wie in Formel (I),

$R^7$, $R^8$, $R^9$ unabhängig voneinander Wasserstoff oder ($C_1$-$C_6$)-Alkyl, vorzugsweise Methyl, und

$R^{10}$ einen aliphatischen oder cycloaliphatischen Rest mit 3 bis 25 C-Atomen, vorzugsweise 6 bis 18 C-Atomen, einen Arylrest mit 6 bis 12 C-Atomen, vorzugsweise 6 C-Atomen, oder

einen Arylalkylrest mit 7 bis 20 C-Atomen, vorzugsweise 7 bis 15 C-Atomen.

Weiterhin bezieht sich die Erfindung auf ein Verfahren zur Herstellung dieser Copolymerisate sowie auf wäßrige Systeme, insbesondere Lackzubereitungen, die diese Copolymerisate enthalten.

Die erfindungsgemäßen Copolymerisate besitzen vorzugsweise eine Säurezahl von 43 bis 180 mg KOH/g und sie verleihen einer wäßrigen Dispersion (30 %) bei 20 °C und einem pH-Wert von 2 eine Viskosität von 1,5 bis 100 mPas, vorzugsweise 1,5 bis 20 mPas.

In obiger Formel (I) steht vorzugsweise einer der beiden Reste $R^1$ oder $R^2$ für einen Alkylrest mit 3 bis 25 C-Atomen, während der andere Rest die allgemeinen Formeln (IV) oder (V)

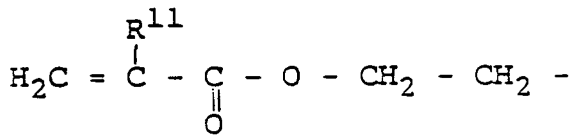 (IV)

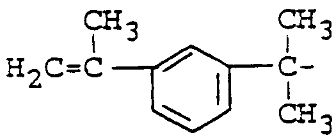 (V)

besitzt, wobei in der Formel (IV) der Rest $R^{11}$ Wasserstoff oder einen $(C_1\text{-}C_6)$-Alkylrest, vorzugsweise einen Methylrest, bedeutet.

Die zu den Einheiten (a) bzw. (b) führenden (Makro)monomeren der obigen Formeln (I) bzw. (II) können beispielsweise hergestellt werden, in dem man Diisocyanate der Formel $OCN\text{-}R^3\text{-}NCO$, in der $R^3$ die obige Bedeutung hat, mit Poly(alkylen)glycolen der Formel

HO - A - H ,

in der A gleichfalls die obige Bedeutung besitzt, und mit Monoisocyanaten der Formeln $R^*NCO$ ($R^* = R^1$, $R^2$, $R^5$ und/oder $R^6$; siehe oben) in entsprechendem Mengenverhältnis umsetzt. Je nach Art dieses Monoisocyanates erhält man dabei einfach ethylenisch ungesättigte Verbindungen (I) oder zweifach ethylenisch ungesättigte Verbindungen (II) oder entsprechende Gemische.

Die urethangruppenhaltigen Monomere gemäß Formel (III) können beispielsweise dadurch erhalten werden, daß man Monoisocyanate der Formel $R^{10}NCO$ mit monoethylenisch ungesättigten OH-terminierten Verbindungen der Formel

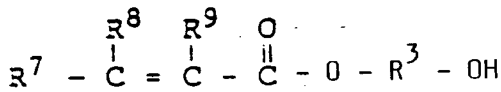

umsetzt.

Gemäß einer bevorzugten Ausgestaltungsform der Erfindung enthält das Copolymerisat neben den Einheiten (a), (b) und/oder (c) noch zusätzlich

(d) Einheiten, die sich ableiten von einfach ethylenisch ungesättigten Monomeren mit mindestens einer Carboxylgruppe und 3 bis 14 C-Atomen,

(e) Einheiten, die sich ableiten von Estern einfach ethylenisch ungesättigten Carbonsäuren, vorzugsweise Monocarbonsäuren mit $(C_1\text{-}C_{25})$-Alkoholen, vorzugsweise $(C_1\text{-}C_8)$-Alkoholen,

(f) gegebenenfalls Einheiten, die sich ableiten von einem amphiphilen, $\alpha,\beta$-ethylenisch ungesättigten Carbonsäureester der allgemeinen Formel (VI)

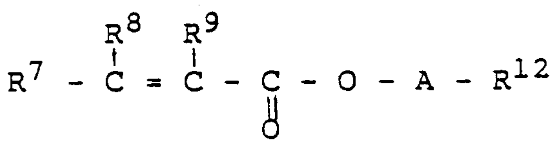 (VI)

in der bedeuten

A sowie $R^7$, $R^8$ und $R^9$ gleiche Bedeutung wie in Formel (I), und

$R^{12}$ Wasserstoff oder einen Kohlenwasserstoffrest mit 1 bis 30 C-Atomen, der auch Heteroatome oder Gruppen mit Heteroatomen enthalten kann, vorzugsweise einen $(C_2\text{-}C_{20})$-Alkylrest, der gegebenenfalls teilweise oder vollständig fluoriert sein kann, einen Phenylrest oder einen $(C_7\text{-}C_{42})$-Alkylphenylrest,

(g) gegebenenfalls Einheiten, die sich ableiten von einfach ethylenisch ungesättigten, urethangruppenhaltigen Monomeren, die von (a) oder (c) verschieden sind,

(h) gegebenenfalls Einheiten, die sich ableiten von anderen, von (a) sowie (c) bis (g) verschiedenen, einfach ethylenisch ungesättigten Monomeren, vorzugsweise Vinylester, Vinylaromaten, ungesättigte Nitrile, ungesättigte Sulfonsäuren oder deren Derivate,

(i) gegebenenfalls Einheiten, die sich ableiten von mehrfach ethylenisch ungesättigten, von (b) verschiedenen Verbindungen und

(j) gegebenenfalls Einheiten, die sich ableiten von Molekulargewichtsreglern.

Bevorzugt leiten sich die Einheiten (d) von einfach ethylenisch ungesättigten ($C_3$-$C_5$)-Monocarbonsäuren, einfach ethylenisch ungesättigten ($C_4$-$C_6$)-Dicarbonsäuren oder deren Halbester mit aliphatischen ($C_1$-$C_8$)-Alkoholen oder Gemischen dieser Monomeren ab, insbesondere Methacrylsäure, Acrylsäure, Crotonsäure, Maleinsäure, Fumarsäure, Malein- oder Fumarsäuremonoalkylester, Itaconsäure oder deren Gemische. Besonders bevorzugt sind hier Acryl- und/oder Methacrylsäure (= (Meth)acrylsäure) sowie Crotonsäure.

Bei den Verbindungen, die zu den Einheiten (e) führen, seien beispielsweise genannt:
Ester ungesättigter Mono- und Dicarbonsäuren mit Alkoholen, wie Acryl- und Methacrylsäureester, beispielsweise Ethylacrylat, Dodecyl(meth)acrylat oder Lauryl(meth)acrylat, Crotonsäureester von ($C_1$-$C_8$)-Alkoholen, wie z.B. Methylcrotonat oder 2-Ethylhexylcrotonat, oder Malein- bzw. Itaconsäureester mit ($C_1$-$C_8$)-Alkoholen, wie z.B. Dimethylmaleinat, Dibutylmaleinat, Di-2-ethylhexylmaleinat, Dimethylitaconat, oder Mono(meth)acrylsäureester von Diolen und Triolen, wie z.B. Ethylenglykol, Butendiol-1,4, Hexandiol-1,6, Glycerin und Trimethylolpropan oder mit endständigen Epoxiden. Bevorzugt sind dabei die niederen (Meth)acrylsäureester, wie die Methyl, Ethyl-, Isopropyl-, Isobutyl-, tert.Butyl- und -n-Butylester. Besonders bevorzugt sind die Methyl- und Ethylester.

Verbindungen der obigen Formel (VI), die zu den Einheiten (f) führen, sind in der EP-Offenlegungsschrift 121.230 offenbart, auf die hiermit verwiesen sei. Bevorzugte Vertreter ergeben sich aus dieser Formel (VI), wenn hierin $R^7$, $R^8$ oder $R^9$ unabhängig voneinander gleich Wasserstoff oder Methyl sind, q in A gleich 0 ist und p hierin für 2 bis 50 steht und $R^{11}$ die folgende Bedeutung hat:
n- oder iso-($C_2$-$C_{30}$)-Alkyl, vorzugsweise ($C_{12}$-$C_{20}$)-Alkyl, insbesondere ($C_{16}$-$C_{18}$)-Alkyl, wie z.B. n- oder iso-Octyl, n- oder iso-Decyl, n- oder iso-Dodecyl, n- oder iso-Hexadecyl, n- oder iso-Octadecyl oder Gemische dieser Reste, so daß sich beispielsweise Crotonsäureester mit 10 Ethylenoxideinheiten und einem $C_{12}$-Alkylrest oder mit 20 Ethylenoxideinheiten und einem iso-Octyl-Rest oder mit 50 Ethylenoxideinheiten und einem $C_{18}$-Alkylrest ergeben können, oder
Monoalkylphenyl mit ($C_4$-$C_{12}$) n- oder iso-Alkylgruppen, vorzugsweise $C_8$- oder $C_9$ n- oder iso-Alkylgruppen, wie z.B. iso-Octylphenyl oder iso-Nonylphenyl, mit denen sich beispielsweise Crotonsäureester mit 5 Ethylenoxideinheiten und einem iso-Octylphenylrest oder mit 11 Ethylenoxideinheiten und einem iso-Nonylphenylrest ergeben können, oder
Dialkylphenyl mit ($C_4$-$C_{12}$) n- oder iso-Alkylgruppen, wie z.B. Diisobutylphenyl, Diisooctylphenyl, Diisononylphenyl, mit denen sich beispielsweise Crotonsäureester mit 20 Ethylenoxideinheiten und einem Diisobutylphenylrest oder 50 Ethylenoxideinheiten und einem Diisooctylphenylrest, oder 80 Ethylenoxideinheiten und einem Diisononylphenylrest ergeben können, oder
Trialkylphenyl mit ($C_4$-$C_{12}$) n- oder iso-Alkylgruppen, wie z.B. Triisobutylphenyl, Triisooctylphenyl oder Triisononylphenyl, mit denen sich beispielsweise Crotonsäureester aus 11 Ethylenoxideinheiten und einem Triisobutylphenylrest oder 23 Ethylenoxideinheiten und einem Triisononylphenylrest oder 50 Ethylenoxideinheiten und einem Triisooctylphenylrest ergeben können.

Selbstverständlich können auch hier - wie bei den anderen Monomeren - wieder Gemische der genannten Monomeren eingesetzt werden, wobei zu berücksichtigen ist, daß die einzusetzenden Verbindungen in der Regel aus technischen Vorprodukten hergestellt werden, die z.B. hinsichtlich ihrer Oxethylierungsgrade bzw. ihrer Molekulargewichtsverteilung eine gewisse Verteilungsbreite aufweisen können.

Bevorzugte Vertreter, die zu den Einheiten (g) führen sind Umsetzungsprodukte aus

$\alpha$) einem einfach ethylenisch ungesättigten Monoisocyanat, wie Isocyanatoethyl(meth)acrylat oder m-Isocyanatoisopropyl-$\alpha$-methylstyrol, mit einem einwertigen Alkohol, der entweder amphiphilen oder nichtamphiphilen Charakter hat,

$\beta$) Umsetzungsprodukten aus OH-funktionellen, einfach ethylenisch ungesättigten Alkylestern mit Diisocyanaten und einwertigen Alkoholen mit amphiphilen oder nichtamphiphilen Charakter, oder

$\gamma$) Gemische dieser Umsetzungsprodukte.

Verbindungen gemäß $\alpha$) sind beispielsweise in der EP-Offenlegungsschrift 173 109 beschrieben, auf die hier Bezug genommen wird. Bei den erwähnten Alkoholen mit amphiphilen Charakter handelt es sich insbesondere um Ethylenoxid-Propylenoxid-Blockcopolymere (Polyethylenpropylenglykole) oder um oxethylierte Alkohole oder Phenole, wobei diese amphiphilen Alkohole vorzugsweise die Formel (VII)

$R^{12}$ - A - OH (VII)

besitzen, in der $R^{12}$ und A die Bedeutung gemäß der obigen Formel (VI) haben.

Die nicht-amphiphilen Alkohole sind beispielsweise Ethylenoxidpolymere (Polyethylenglykole) oder $C_2$-$C_{20}$-Alkohole.

Die OH-funktionellen, einfach ethylenisch ungesättigten Alkylester gemäß β) besitzen vorzugsweise die Formel (VIII)

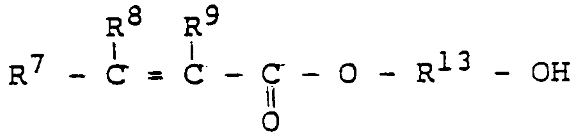

(VIII)

in der $R^7$, $R^8$ und $R^9$ die Bedeutung gemäß Formel (VI) besitzen und $R^{13}$ einen zweiwertigen Kohlenwasserstoffrest, vorzugsweise aliphatischen Charakters, mit 2 bis 10 C-Atomen, vorzugsweise 2 bis 6 C-Atomen, darstellt.

Bei den oben unter β) genannten Diisocyanaten handelt es sich um die auf dem Polyurethan- bzw. Lackgebiet bekannten Verbindungen, wie aliphatische, cycloaliphatische oder aromatische Diisocyanate. Diese besitzen vorzugsweise die Formel $R^3(NCO)_2$, wobei $R^3$ die Bedeutung gemäß Formel (I) hat. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'- oder 2,4'-Diisocyanatodiphenylmethan, 4,4'-Diisocyanatodiphenylpropan-(2,2), m- oder p-Xylylendiisocyanat sowie aus diesen Verbindungen bestehende Gemische.

Unter den Verbindungen, die zu den Einheiten (h) führen, sind vorzugsweise geeignet:
Vinylester von ($C_1$-$C_{12}$)-Carbonsäuren wie Essigsäure, Propionsäure, 2-Ethylhexansäure, Versaticsäure 9, Versaticsäure 10, Laurinsäure, ferner Vinylether, weiterhin ungesättigte aromatische Verbindungen, wie Styrol oder Vinyltoluol, ferner ungesättigte Nitrile, wie (Meth)acrylnitril, oder ungesättigte Amide, wie (Meth)-acrylsäureamid, N-Methylol(meth)acrylamid sowie entsprechende Ether, wie N-Methylol(meth)-acrylamidmethyl- oder -butylether, Hydroxyethyl- oder Hydroxypropyl(meth)acrylamid, 2-t-Butylaminoethylmethacrylamid, N,N-Dimethylaminoethylmethacrylamid, oder ungesättigte Sulfonsäuren, vorzugsweise Äthylensulfonsäure oder Acrylamidopropansulfonsäure bzw. vorzugsweise deren Salze, insbesondere Alkali- oder Ammoniumsalze.

Die mehrfach ethylenisch ungesättigten Verbindungen, welche die Einheiten (i) liefern, besitzen in der Regel zwei bzw. drei Doppelbindungen. Beispielsweise sind hier zu nennen: Diallylphthalat, Diallylmaleinat, Divinylbenzol, Ethandioldi(meth)acrylat, Butandioldi(meth)acrylat, Hexandioldi(meth)acrylat, Pentaerythrittriacrylat, Trimethylolpropantriacrylat, Tetraethylenglykoldiacrylat, Tripropylenglykoldiacrylat, Trimethylolpropantrimethacrylat, Tetraallyloxethan, N,N'-Methylen-Bis(meth)acrylamid.

Als Regler, die zu den am Kettenende des Copolymerisats stehenden Einheiten (j) führen, können alle Verbindungen eingesetzt werden, die radikalübertragende Eigenschaften besitzen. Beispiele hierfür sind vorzugsweise Mercaptane (ein- und mehrfunktionelle), wie z.B. n- bzw. t-Dodecylmercaptan, Tetrakismercaptoacetylpentaerythrit, Thioglykolsäure und dergleichen. Es können aber auch andere Verbindungen als Regler verwendet werden, wie z.B. Toluol, Trichlorbrommethan und Tetrachlorkohlenstoff.

Die Menge an diesen Einheiten (a) bis (j) im erfindungsgemäßen Copolymerisat können innerhalb eines relativ weiten Rahmens schwanken. Im allgemeinen betragen sie bei (a) 0 bis 30 Gew.-%, vorzugsweise 0 bis 10 Gew.-%, bei (b) 0 bis 20 Gew.-%, vorzugsweise 0 bis 8 Gew.-%, (c) 0 bis 30 Gew.-%, vorzugsweise 0 bis 10 Gew.-%, wobei die Menge einer dieser drei Einheiten von Null verschieden sein muß, bei (d) 1 bis 55 Gew.-%, vorzugsweise 3 bis 30 Gew.-%, bei (e) 30 bis 85 Gew.-%, vorzugsweise 30 bis 60 Gew.-%, bei (f)0 bis 30 Gew.-%, vorzugsweise 0 bis 10 Gew.-%, bei (g) 0 bis 60 Gew.-%, vorzugsweise 0 bis 20 Gew.-%, bei (h) 0 bis 40 Gew.-%, vorzugsweise 0 bis 35 Gew.-%, bei (i) 0 bis 20 Gew.-%, vorzugsweise 0 bis 10 Gew.-%, wobei die Gesamtmenge an (b) und (i) 20 Gew.-%, vorzugsweise 10 Gew.-% nicht übersteigt, und bei (j) 0 bis 5 Gew.-%, vorzugsweise 0 bis 3 Gew.-%. Diese Prozentangaben beziehen sich dabei jeweils auf das Copolymerisat.

Die Herstellung der erfindungsgemäßen Copolymerisate kann zum Beispiel durch übliche, radikalisch initiierte Lösungscopolymerisation in üblichen Lösungsmitteln, oder auch durch übliche Emulsionscopolymerisation in wäßrigem Medium erfolgen. Bei einer Herstellung mittels Emulsionscopolymerisation liegt der Feststoffgehalt der resultierenden Dispersion vorzugsweise zwischen 10 und 55 Gew.-%. Bevorzugtes Herstellungsverfahren ist die Emulsionscopolymerisation.

Bei der bevorzugten Emulsionscopolymerisation werden die Verbindungen entsprechend (a), (b) und/oder (c), (d) und (e) sowie gegebenenfalls (f) bis (j) in den jeweiligen Mengen in wäßriger Phase bei Temperaturen von zumeist 50 bis 100 °C, vorzugsweise 75 bis 100 °C, in Gegenwart üblicher Initiatoren und vorzugsweise auch in Gegenwart geeigneter Emulgatoren copolymerisiert. Als Initiatoren, die üblicherweise in Mengen von 0,01-2 Gew.-%, bezogen auf die Gesamtmonomer-Menge, eingesetzt werden, kommen z.B. Alkali- oder Ammoniumpersulfate in Frage.

Als Emulgatoren können die üblichen ionogenen und nichtionogenen Emulgatoren zur Emulgierung der Monomeren und zur Stabilisierung des Latex eingesetzt werden. Als anionische Emulgatoren kommen z.B. in Betracht: Alkylsulfate, Alkylarylsulfate, Alkylarylsulfonate, Alkali- und/oder Ammoniumsalze von Alkyl- bzw.
Alkylarylpolyglykolethersulfaten. Als nichtionogene Emulgatoren seien hier genannt: oxethylierte Fettalkohole oder oxethylierte Alkylphenole Die Emulgatormenge beträgt im allgemeinen 0,3-5 Gew.-%, bezogen auf das Gesamtmonomerengewicht.

Aus den erhaltenen wäßrigen Emulsionen bzw. Lösungen können die erfindungsgemäßen Verdicker im Bedarfsfalle nach üblichen Verfahren, z.B. durch Sprühtrocknung, isoliert werden.

Bei der Auswahl von Art und Menge der jeweiligen Monomeren ist u.a. auf folgendes hinzuweisen:
Die Vernetzer entsprechend (b) und/oder (i) steigern häufig die Verdickerkapazität bzw. beeinflussen die rheologischen Eigenschaften der erfindungsgemäßen Copolymerisate in wäßrigen Systemen günstig und werden daher erfindungsgemäß bevorzugt eingesetzt.

Die Verwendung von Molekulargewichtsreglern entsprechend (j) während der Copolymerisation führt zu niedrigeren Molekulargewichten der Copolymerisate. Damit sinkt die Viskosität der wäßrigen Lösungen derartiger Copolymerisate, verglichen mit den ungeregelten Produkten. Man kann auf diese Weise die Möglichkeit verbessern, die erforderliche Balance zwischen hoher low-shear-Viskosität und niedriger high-shear-Viskosität für spezielle Anwendungssysteme gezielt einzustellen.

Eine zusätzliche Beeinflussung der Verdickerkapazität erfindungsgemäßer Copolymerisate kann durch (weiteren) Zusatz von ionischen oder nichtionischen Emulgatoren zum wäßrigen System, insbesondere vor, aber auch nach erfolgter Neutralisation der freien Säuregruppen des Copolymerisats, erzielt werden. Werden zum Verdicken eines wäßrigen, disperse Feststoffe enthaltenden Systems z.B. 0,01-5 Gew.-% des erfindungsgemäßen Copolymerisats als Verdicker eingesetzt (bezogen auf Feststoff), so liegt der günstige Bereich für ggf. noch zuzusetzende Emulgatormengen zwischen 0,01 und 10 Gew.-% (bezogen auf Feststoff).

Die Anwendung der erfindungsgemäßen Copolymerisate als Verdicker erfolgt vorzugsweise in deren teilweise oder vollständig mit Basen neutralisierten, wasserlöslichen oder in Wasser kolloidal dispergierbaren Form, um wäßrige Systeme zu verdicken und ihnen spezielle rheologische Eigenschaften zu verleihen. Während die erfindungsgemäßen Copolymerisate in ihrer freien Säureform vorzugsweise wasserunlösliche Produkte darstellen, sind ihre Salze mit Basen, insbesondere die Alkali-, Ammonium- oder Aminsalze, klar wasserlöslich oder in kolloidaler Form in Wasser dispergierbar. Der Einsatz der Copolymerisate als Verdicker kann beispielsweise so erfolgen, daß man sie dem zu verdickenden wäßrigen System zunächst als niedrigviskose Lösung in einem geeigneten Lösungsmittel oder als wenig viskose wäßrige Copolymerisat-Dispersion beimischt und anschließend das resultierende Gemisch, einschließlich z.B. aller gegebenenfalls darin enthaltenen Pigmente und Lackbestandteile, durch Basenzusatz teilweise oder vollständig neutralisiert oder leicht alkalisch einstellt, beispielsweise auf pH-Werte von 5-10,5, insbesondere 7-9,5. Bevorzugt werden die Copolymerisate jedoch als wäßrige Pasten den zu verdickenden wäßrigen Systemen zugemischt.

Bevorzugte Einsatzgebiete für die erfindungsgemäßen Copolymerisate sind das Verdicken und die Viskositätseinstellung disperser wäßriger Systeme, wie vorzugsweise von wäßrigen Metallic-Basislacken, Dispersionsfarben, Dispersionsglanzlacken, Textildruckpasten, Papierdruckpasten, ferner von bioziden Wirkstoffdispersionen für den Pflanzenschutz und die Schädlingsbekämpfung, Flüssigdüngemitteln, Emulsionsreinigern, Abbeizpasten, Enteisungsmitteln oder kosmetischen Zubereitungen. Eine weitere interessante Verwendung der erfindungsgemäßen Copolymerisate ist deren Einsatz als durch alkalische Flotten leicht auswoschbare Schlichtemittel in der Textilindustrie bzw. als Schlichtemittelkomponenten.

Die Einsatzmengen an den erfindungsgemäßen Copolymerisaten sind nicht kritisch. Sie liegen jedoch beim Einsatz als Verdicker bevorzugt im Bereich von 0,01 bis 5 Gew.-% Copolymerisat, bezogen auf das

zu verdickende wäßrige System.

Die Erfindung wird durch die nachfolgenden Beispiele näher erläutert.

Beispiel 1

1.1 Synthese des grenzflächenaktiven, urethangruppenhaltigen Monomers (a) und des bifunktionellen, urethangruppenhaltigen Vernetzers (b) (-> r in Formeln (I)/(II) = 0) als Gemisch.

285,1 g Polyethylenglykol-200 (Molekulargewicht 200) wurden bei 100-110 °C im Stickstoffstrom getrocknet. Nach 2 Stunden wurde auf 60 °C gekühlt und eine Mischung aus 425,3 g Stearylisocyanat und 289,6 g m-Isocyanatoisopropyl-α-methylstyrol innerhalb 30 min zudosiert. Die Temperatur wurde wieder auf 100 °C erhöht und bei dieser Temperatur gerührt, bis kein Isocyanat mehr titrierbar war. Analog dieser Vorschrift wurden Polyethylenglykole höheren Molekulargewichts (200-10000) umgesetzt.

1.2 Synthese des grenzflächenaktiven, urethangruppenhaltigen Monomers (a) mit mehr als einer hydrophoben Gruppe, sowie des bifunktionellen urethangruppenhaltigen Vernetzers (b). (r in Formeln (I)/(II) ≠ 0).

741,3 g Polyethylenglykol-1000 wurden bei 100-110 °C im Stickstoffstrom getrocknet. Nach 2 Stunden wurde auf 60 °C gekühlt und 65,4 g Hexamethylendiisocyanat innerhalb 5 min zugegeben. Die Temperatur wurde auf 100 °C erhöht und so lange gehalten, bis kein Isocyanat mehr titrierbar war. Es wurde erneut auf 60 °C gekühlt und eine Mischung aus- 115 g Stearylisocyanat und 78,3 g m-Isocyanatoisopropyl-α-methylstyrol innerhalb von 30 min zudosiert. Die Reaktionsmischung wurde so lange bei 100 °C gehalten, bis kein Isocyanat mehr titrierbar war.

1.3 Synthese nichtamphiphiler, urethangruppenhaltiger Monomerer (c)

1000 g 2-Hydroxyethylmethacrylat wurden auf 60 °C erwärmt und 915,3 g Phenylisocyanat zudosiert. Die Mischung wurde bei 60 °C gerührt, bis kein Isocyanat mehr titrierbar war. Ebenso wurden Monomere mit Cyclohexylisocyanat und Stearylisocyanat hergestellt.

1.4 Herstellung des erfindungsgemäßen Copolymerisates

Probe 1

44,5 g eines Monomers gemäß Beispiel 1.1 unter Einsatz eines Polyethylenglykols mit einem Molekulargewicht von 1000 (-> (a) + (b)), 132,7 g Methacrylsäure (-> (d)) und 152,5 g Ethylacrylat (-> (e)) wurden in einer Lösung aus 2,5 g (R)Hostapal BV (Alkylarylpolyglykolethersulfat, Natriumsalz) und 186 g Wasser emulgiert. 10 % dieser Emulsion wurden zusammen mit 16 ml einer Lösung bestehend aus 0,8 g Ammoniumperoxodisulfat in 50 ml Wasser zu einer Flotte aus 2,5 g Hostapal BV in 522 g Wasser bei 80 °C gegeben.

20 Minuten nach der Zugabe wurde die restliche Monomeremulsion sowie die restliche Initiatorlösung innerhalb 2 Stunden parallel zudosiert. Nach 2,5 Stunden Nachreaktion wurde die Dispersion über eine KG 0/400 Filterplatte filtriert. Durch anschließende partielle oder vollständige Neutralisation mit Basen wurde die Verdickerlösung erhalten.

Proben 2 bis 9

In gleicher Weise wie bei der Probe 1 wurden durch analoge Emulsionspolymerisationen aus den in der Tabelle 1 jeweils aufgeführten Monomerbestandteilen und Mengen die Proben 2 bis 9 gleichfalls in Dispersionsform hergestellt. Die teilweise mitverwendeten Vernetzer (-> (i)) wurden dabei in den angegebenen Mengen, bezogen auf die gesamte molare Menge der Monomeren, jeweils der Monomerenmischung beigemischt. Die Probe 9 diente dabei zu Vergleichszwecken.

In der Tabelle 1 sind weiterhin die Viskositäten der jeweiligen Copolymerisatlösungen (1 % Feststoff; mit Ammoniak neutralisiert) bei kleinem und großem Schergefälle aufgeführt. Der Vergleich mit der Probe 9 zeigt dabei die überraschende Verbesserung bei den erfindungsgemäßen Copolymerisaten.

Tabelle 1

Zusammensetzung der Copolymerisate 1 bis 9 in mol%, bezogen auf Gesamtmonomerenmischung ohne Regler sowie Rheologie der entsprechenden Lösungen

| | Zusammensetzung | | | | | | Rheologie | | |
|---|---|---|---|---|---|---|---|---|---|
| Nr.: | amphiphiles Urethan-monomer 1) (a) + (b) | Urethan-comonomer 2) (c) | Methacryl-säure (d) | Ethyl-acrylat (e) | amphiphiler Crotonester 3) (f) | Vernetzer 4) (i) | pH-Wert der Lösung | Viskosität (0,01/s) [Pa s] | Viskosität (10000/s) [Pa s] |
| 1 | 0,5 | - | 50 | 49,5 | - | - | 7,27 | 73,65 | 0,04 |
| 2 | 0,3 | - | 50 | 49,7 | - | - | 7,38 | 5,6 | 0,06 |
| 3 | - | 0,75 | 50 | 48,6 | 0,5 | 0,15 | 8,49 | 39,3 | 0,06 |
| 4 | - | 0,5 | 50 | 48,85 | 0,5 | 0,15 | 7,25 | 37,3 | 0,04 |
| 5 | - | 1 | 50 | 48,4 | 0,5 | 0,10 | 7,31 | 53,8 | 0,04 |
| 6 | - | 1,5 | 50 | 48 | 0,5 | 0,15 | 7,45 | 37,32 | 0,04 |
| 7 | - | 1 | 50 | 48,5 | 0,5 | 0,15 | 7,44 | 39,27 | 0,04 |
| 8 | - | - | 43,6 | 56,3 | - | 0,05 | 8,06 | 13,5 | 0,07 |
| 9 5) | - | - | 54,4 | 44,1 | 1,5 | - | 8,14 | 0,2 | 0,02 |

1) gemäß Beispiel 1.1

2) hergestellt aus 2-Hydroxyethylmethacrylat und Phenylisocyanat gemäß Beispiel 1.3.

3) hergestellt aus (R)Genapol-T-250 (aus Fettalkohol und 25 mol Ethylenoxid) und Crotonsäure.

4) Diallylmaleinat

5) Vergleichsprobe

## Patentansprüche

## Patentansprüche für folgende Vertragsstaaten : AT, BE, CH, DE, FR, GB, IT, LI, NL, SE

1. Carboxylgruppenhaltiges Copolymerisat mit Verdickerwirkung in wäßrigen Systemen, das eine Säurezahl von mindestens 43 mg KOH/g aufweist, und das neben Einheiten, die sich von Carboxylgruppen aufweisenden Monomeren ableiten, auch mindestens eine Einheit enthält, die sich von nichtionischen, gegebenenfalls grenzflächenaktiven Gruppen enthaltenden Monomeren sowie gegebenenfalls von vernetzenden Monomeren ableitet, dadurch gekennzeichnet, daß
   - die nichtionischen, gegebenenfalls grenzflächenaktive Gruppen enthaltenden Monomeren ausgewählt sind aus den urethangruppenhaltigen, einfach olefinisch ungesättigten Makromonomeren a) der allgemeinen Formel (I)

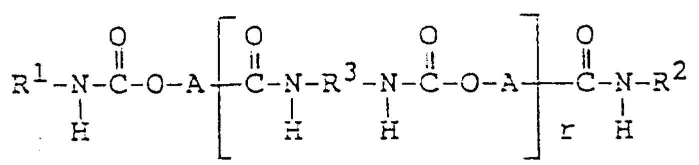

(I)

in der bedeuten

R¹ und R² — unabhängig voneinander einen gesättigten Kohlenwasserstoffrest mit 3 bis 25 C-Atomen, der gegebenenfalls auch Heteroatome oder Gruppen mit Heteroatomen enthalten kann, oder einen einfach ethylenisch ungesättigten Kohlenwasserstoffrest mit bis 15 C-Atomen, der Heteroatome oder Gruppen mit Heteroatomen enthalten kann, mit der Maßgabe, daß einer der beiden Reste $R^1$ oder $R^2$ einfach ethylenisch ungesättigt ist,

$R^3$ — einen zweiwertigen, gesättigten Kohlenwasserstoffrest mit 1 bis 30 C-Atomen, der gegebenenfalls Heteroatome oder Gruppen mit Heteroatomen enthalten kann,

A — den Rest

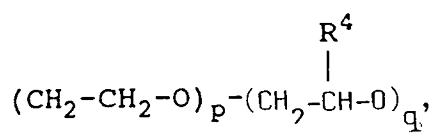

in dem $R^4$ $(C_1\text{-}C_6)$-Alkyl bedeuten und p eine Zahl von 2 bis 300, q eine Zahl von 0 bis 300 darstellen,

r — eine Zahl von 0 bis 10,

und aus den urethangruppenhaltigen, mehrfach olefinisch ungesättigten vernetzenden Makromonomeren b) der allgemeinen Formel (II)

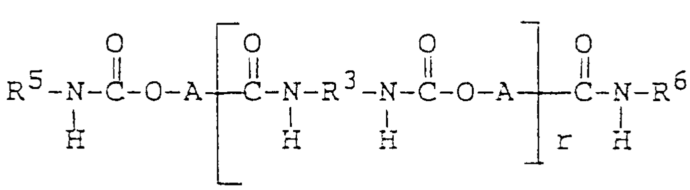

(II)

in der $R^3$, A und r die vorstehende Bedeutung gemäß Formel (I) haben und

$R^5$ und $R^6$ — unabhängig voneinander für einen einfach ethylenisch ungesättigten Kohlenwasserstoffrest mit 3 bis 15 C-Atomen stehen, der Heteroatome oder Gruppen mit Heteroatomen enthalten kann

und den nichtionischen Monomeren c), die frei von grenzflächenaktiven Gruppen sind und urethangruppenhaltige Monomere der allgemeinen Formel (III) sind,

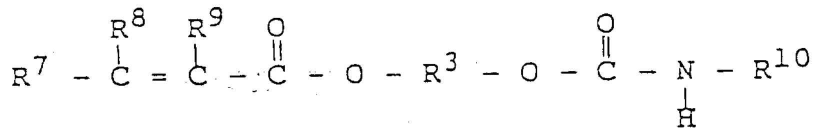 (III)

in der bedeuten

| | |
|---|---|
| $R^3$ | gleiche Bedeutung wie in Formel (I), |
| $R^7$, $R^8$, $R^9$ | unabhängig voneinander Wasserstoff oder ($C_1$-$C_6$)-Alkyl, und |
| $R^{10}$ | einen aliphatischen oder cycloaliphatischen Rest mit 3 bis 25 C-Atomen, einen Arylrest mit 6 bis 12 C-Atomen oder einen Arylalkylrest mit 7 bis 20 C-Atomen. |

**2.** Copolymerisat gemäß Anspruch 1, dadurch gekennzeichnet, daß Gie Säurezahl zwischen 43 und 180 mg KOH/g und die Viskosität (30%ige wäßrige Dispersion; 20 °C; pH 2) zwischen 1,5 und 100 mPas liegen.

**3.** Copolymerisat gemäß Anspruch 1 und/oder 2, dadurch gekennzeichnet, daß in den Formeln (I) und/oder (II) $R^3$ einen Alkylenrest mit 1 bis 25 C-Atomen, oder einen Arylenrest mit 6 bis 12 C-Atomen oder einen Arylalkylidenrest mit 6 bis 30 C-Atomen bedeutet, $R^4$ in dem Rest A Methyl bedeutet, p eine Zahl von 10 bis 100 und q eine Zahl von 0 bis 10 darstellt.

**4.** Copolymerisat gemäß mindestens einem der Ansprüche 1 bis 3, dadurch gekennzeichnet, daß in der Formel (I) einer der beiden Reste $R^1$ oder $R^2$ für einen Alkylrest mit 3 bis 25 C-Atomen steht und der andere die allgemeinen Formeln (IV) oder (V)

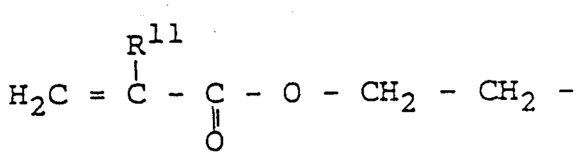 (IV)

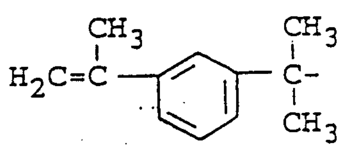 (V)

besitzt, wobei in der Formel (IV) der Rest $R^{11}$ für Wasserstoff oder einen ($C_1$-$C_6$)-Alkylrest, vorzugsweise einen Methylrest, steht.

**5.** Copolymerisat gemäß mindestens einem der Ansprüche 1 bis 4, dadurch gekennzeichnet, daß es zusätzlich zu den Einheiten (a), (b) und/oder (c) noch enthält

(d) Einheiten, die sich ableiten von einfach ethylenisch ungesättigten Monomeren mit mindestens einer Carboxylgruppe mit 3 bis 14 C-Atomen

(e) Einheiten, die sich ableiten von Estern einfach ethylenisch ungesättigten Carbonsäuren, vorzugsweise Monocarbonsäuren mit ($C_1$-$C_{25}$)-Alkoholen, vorzugsweise ($C_1$-$C_8$)-Alkoholen,

(f) grenzflächenaktiven $\alpha,\beta$-ethylenisch ungesättigten Carbonsäureesters der allgemeinen Formel (VI)

$$R^7-\overset{R^8}{\overset{|}{C}}=\overset{R^9}{\overset{|}{C}}-\underset{\underset{O}{\|}}{C}-O-A-R^{12} \qquad (VI)$$

in der bedeuten

A sowie $R^7$, $R^8$ und $R^9$ gleiche Bedeutung wie in Formel (I), und

$R^{12}$ Wasserstoff oder einen Kohlenwasserstoffrest mit 1 bis 30 C-Atomen, der auch Heteroatome oder Gruppen mit Heteroatomen enthalten kann, vorzugsweise einen ($C_2$-$C_{20}$)-Alkylrest der gegebenenfalls teilweise oder vollständig fluoriert sein kann, einen Phenylrest oder einen ($C_7$-$C_{42}$)-Alkylphenylrest,

(g) gegebenenfalls Einheiten, die sich ableiten von einfach ethylenisch ungesättigten, urethangruppenhaltigen Monomeren, die von (a) oder (c) verschieden sind,

(h) gegebenenfalls Einheiten, die sich ableiten von anderen, von (a) sowie (c) bis (f) verschiedenen, einfach ethylenisch ungesättigten Monomeren, vorzugsweise Vinylester, Vinylaromaten, ungesättigte Nitrile, ungesättigte Sulfonsäuren oder deren Derivate,

(i) gegebenenfalls Einheiten, die sich ableiten von mehrfach ethylenisch ungesättigten, von (b) verschiedenen Verbindungen und

(j) gegebenenfalls Einheiten, die sich ableiten von Molekulargewichtsreglern.

**6.** Copolymerisat gemäß Anspruch 5, dadurch gekennzeichnet, daß sich die Einheiten (d) ableiten von einfach ethylenisch ungesättigten ($C_3$-$C_5$)-Monocarbonsäuren, einfach ethylenisch ungesättigten ($C_4$-$C_6$)-Dicarbonsäuren oder deren Halbester mit aliphatischen ($C_1$-$C_8$)-Alkoholen oder Gemischen dieser Monomeren, vorzugsweise Methacrylsäure, Acrylsäure, Crotonsäure, Maleinsäure, Fumarsäure, Malein- oder Fumarsäuremonoalkylester, Itaconsäure oder deren Gemische.

**7.** Copolymerisat gemäß Anspruch 5, dadurch gekennzeichnet, daß sich die Einheiten (g) ableiten von Umsetzungsprodukten aus Isocyanatoethyl(meth)acrylat, oder m-Isocyanatoisopropyl-$\alpha$-methylstyrol mit einwertigen Alkoholen.

**8.** Copolymerisat gemäß Anspruch 5, dadurch gekennzeichnet, daß sich die Einheiten (i) ableiten von Diallylmaleinat, Divinylbenzol, Diallylphthalat, Butandioldi(meth)acrylat, oder Tetraallyloxyethan.

**9.** Copolymerisat gemäß mindestens einem der Ansprüche 1 bis 8, dadurch gekennzeichnet, daß daß die Menge an (a) 0 bis 30 Gew.-%, vorzugsweise 0 bis 10 Gew.-%, die Menge an (b) 0 bis 20 Gew.-%, vorzugsweise 0 bis 8 Gew.-%, die Menge an (c) 0 bis 30 Gew.-%, vorzugsweise 0 bis 10 %, wobei die Menge einer dieser drei Einheiten von Null verschieden sein muß, die Menge an (d) 1 bis 55 Gew.-%, vorzugsweise 3 bis 30 Gew.-%, die Menge an (e) 30 bis 85 Gew.-%, vorzugsweise 30 bis 60 Gew.-%, die Menge an (f) 0 bis 30 Gew.-%, vorzugsweise 0 bis 10 Gew.-%, die Menge an (g) 0 bis 60 Gew.-%, vorzugsweise 0 bis 20 Gew.-%, die Menge an (h) 0 bis 40 Gew.-%, vorzugsweise 0 bis 35 Gew.-%, die Menge an (i) 0 bis 20 Gew.-%, vorzugsweise 0 bis 10 Gew.-%, wobei die Gesamtmenge an (b) und (h) 20 Gew.-%, vorzugsweise 10 Gew.-% nicht übersteigt, und die Menge an (j) 0 bis 5 Gew.-%, vorzugsweise 0 bis 3 Gew.-% betragen, wobei sich diese Prozentangaben jeweils auf das Copolymerisat beziehen.

**10.** Verfahren zur Herstellung der Copolymerisate gemäß mindestens einem der Ansprüche 1 bis 9, durch radikalisch initiierte Emulsions- oder Lösungscopolymerisation, vorzugsweise Emulsionscopolymerisation, ungesättigter, copolymerisationsfähiger, Carboxylgruppen enthaltender Monomerer d), gegebenenfalls in Gegenwart von Molekulargewichtsreglern, sowie gegebenenfalls nachfolgender teilweiser oder vollständiger Neutralisation der freien Säuregruppen der Copolymerisate durch Zusatz von Basen, dadurch gekennzeichnet, daß man als Monomere mindestens eines aus der Gruppe (a) bis (c) sowie zusätzlich gegebenenfalls (e) bis (i) einsetzt.

**11.** Wäßriges System, enthaltend die Copolymerisate nach mindestens einem der Ansprüche 1 bis 9.

**12.** Wäßriges System nach Anspruch 11, dadurch gekennzeichnet, daß die Carboxylgruppen des Copolymerisates teilweise oder vollständig neutralisiert sind.

**13.** Wäßriges System nach Anspruch 11 und/oder 12, dadurch gekennzeichnet, daß es sich hierbei um eine Lackzubereitung handelt.

**Patentansprüche für folgenden Vertragsstaat : ES**

**1.** Verfahren zur Herstellung eines carboxylgruppenhaltigen Copolymerisats mit Verdickerwirkung in wäßrigen Systemen, das eine Säurezahl von mindestens 43 mg KOH/g aufweist, und das neben Einheiten, die sich von Carboxylgruppen aufweisenden Monomeren ableiten, auch mindestens eine Einheit enthält, die sich von nichtionischen, gegebenenfalls grenzflächenaktiven Gruppen enthaltenden Monomeren sowie gegebenenfalls von vernetzenden Monomeren ableitet, dadurch gekennzeichnet, daß die nichtionischen, gegebenenfalls grenzflächenaktive Gruppen enthaltenden Monomeren ausgewählt sind aus den urethangruppenhaltigen Makromonomeren a) der allgemeinen Formel (I)

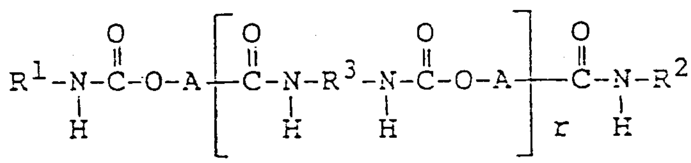

(I)

in der bedeuten

$R^1$ und $R^2$ unabhängig voneinander einen gesättigten Kohlenwasserstoffrest mit 3 bis 25 C-Atomen, der gegebenenfalls auch Heteroatome oder Gruppen mit Heteroatomen enthalten kann, oder einen einfach ethylenisch ungesättigten Kohlenwasserstoffrest mit bis 15 C-Atomen, der Heteroatome oder Gruppen mit Heteroatomen enthalten kann, mit der Maßgabe, daß einer der beiden Reste $R^1$ oder $R^2$ einfach ethylenisch ungesättigt ist,

$R^3$ einen zweiwertigen, gesättigten Kohlenwasserstoffrest mit 1 bis 30 C-Atomen, der gegebenenfalls Heteroatome oder Gruppen mit Heteroatomen enthalten kann,

A den Rest

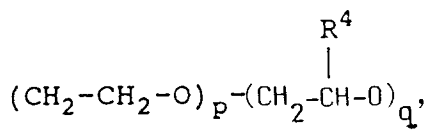

in dem $R^4$ $(C_1\text{-}C_6)$-Alkyl bedeuten und p eine Zahl von 2 bis 300, q eine Zahl von 0 bis 300 darstellen,

r eine Zahl von 0 bis 10,

und aus den urethangruppenhaltigen, mehrfach olefinisch ungesättigten vernetzenden Makromonomeren b) der allgemeinen Formel (II)

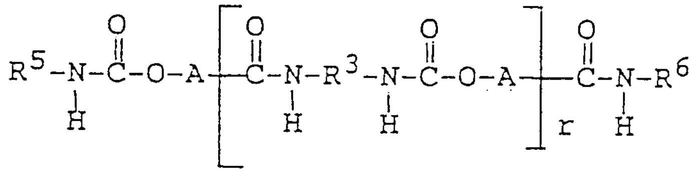

(II)

in der $R^3$, A und r die vorstehende Bedeutung gemäß Formel (I) haben und

$R^5$ und $R^6$ unabhängig voneinander für einen einfach ethylenisch ungesättigten Kohlenwasserstoffrest mit 3 bis 15 C-Atomen stehen, der Heteroatome oder Gruppen mit Heteroatomen enthalten kann

und den nichtionischen Monomeren c), die frei von grenzflächenaktiven Gruppen sind und urethangruppenhaltige Monomere der allgemeinen Formel (III) sind,

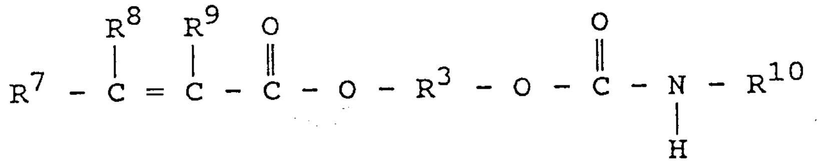 (III)

in der bedeuten

| | |
|---|---|
| $R^3$ | gleiche Bedeutung wie in Formel (I), |
| $R^7$, $R^8$, $R^9$ | unabhängig voneinander Wasserstoff oder $(C_1$-$C_6)$-Alkyl, und |
| $R^{10}$ | einen aliphatischen oder cycloaliphatischen Rest mit 3 bis 25 C-Atomen,<br>einen Arylrest mit 6 bis 12 C-Atomen oder<br>einen Arylalkylrest mit 7 bis 20 C-Atomen, |

und daß die Monomeren durch radikalisch initiierte Emulsions- oder Lösungscopolymerisation, vorzugsweise Emulsionscopolymerisation, gegebenenfalls in Gegenwart von Molekulargewichtsreglern polymerisiert, sowie gegebenenfalls anschließend die freien Säuregruppen der Copolymerisate durch Zusatz von Basen teilweise oder vollständig neutralisiert werden.

**2.** Verfahren gemäß Anspruch 1, dadurch gekennzeichnet, daß man ein Copolymerisat herstellt, dessen Säurezahl zwischen 43 und 180 mg KOH/g und dessen Viskosität (30 %ige wäßrige Dispersion; 20 °C; pH 2) zwischen 1,5 und 100 mPas liegt.

**3.** Verfahren gemäß Anspruch 1 und/oder 2, dadurch gekennzeichnet, daß in den Formeln (I) und/oder (II) $R^3$ einen Alkylenrest mit 1 bis 25 C-Atomen, oder einen Arylenrest mit 6 bis 12 C-Atomen oder einen Arylalkylidenrest mit 6 bis 30 C-Atomen bedeutet, $R^4$ in dem Rest A Methyl bedeutet, p eine Zahl von 10 bis 100 und q eine Zahl von 0 bis 10 darstellt.

**4.** Verfahren gemäß mindestens einem der Ansprüche 1 bis 3, dadurch gekennzeichnet, daß in der Formel (I) einer der beiden Reste $R^1$ oder $R^2$ für einen Alkylrest mit 3 bis 25 C-Atomen steht und der andere die allgemeinen Formeln (IV) oder (V)

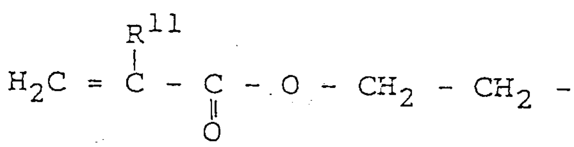 (IV)

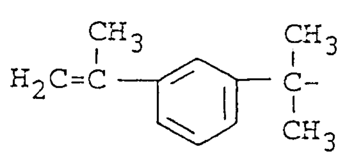 (V)

besitzt, wobei in der Formel (IV) der Rest $R^{11}$ für Wasserstoff oder einen $(C_1$-$C_6)$-Alkylrest, vorzugsweise einen Methylrest, steht.

**5.** Verfahren gemäß mindestens einem der Ansprüche 1 bis 4, dadurch gekennzeichnet, daß man ein Copolymerisat herstellt, das zusätzlich zu den Einheiten (a), (b) und/oder (c) noch enthält

(d) Einheiten, die sich ableiten von einfach ethylenisch ungesättigten Monomeren mit mindestens einer Carboxylgruppe mit 3 bis 14 C-Atomen

(e) Einheiten, die sich ableiten von Estern einfach ethylenisch ungesättigten Carbonsäuren, vorzugsweise Monocarbonsäuren mit $(C_1$-$C_{25})$-Alkoholen, vorzugsweise $(C_1$-$C_8)$-Alkoholen,

(f) grenzflächenaktiven, $\alpha$, $\beta$-ethylenisch ungesättigten Carbonsäureesters der allgemeinen Formel (VI)

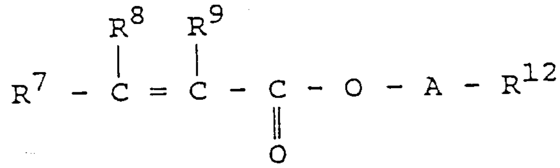

(VI)

in der bedeuten

A, sowie $R^7$, $R^8$ und $R^9$ gleiche Bedeutung wie in Formel (I), und

$R^{12}$ Wasserstoff oder einen Kohlenwasserstoffrest mit 1 bis 30 C-Atomen, der auch Heteroatome oder Gruppen mit Heteroatomen enthalten kann, vorzugsweise einen ($C_2$-$C_{20}$)-Alkylrest der gegebenenfalls teilweise oder vollständig fluoriert sein kann, einen Phenylrest oder einen ($C_7$-$C_{42}$)-Alkylphenylrest,

(g) gegebenenfalls Einheiten, die sich ableiten von einfach ethylenisch ungesättigten, urethangruppenhaltigen Monomeren, die von (a) oder (c) verschieden sind,

(h) gegebenenfalls Einheiten, die sich ableiten von anderen, von (a) sowie (c) bis (f) verschiedenen, einfach ethylenisch ungesättigten Monomeren, vorzugsweise Vinylester, Vinylaromaten, ungesättigte Nitrile, ungesättigte Sulfonsäuren oder deren Derivate,

(i) gegebenenfalls Einheiten, die sich ableiten von mehrfach ethylenisch ungesättigten, von (b) verschiedenen Verbindungen und

(j) gegebenenfalls Einheiten, die sich ableiten von Molekulargewichtsreglern.

**6.** Verfahren gemäß Anspruch 5, dadurch gekennzeichnet, daß sich die Einheiten (d) ableiten von einfach ethylenisch ungesättigten ($C_3$-$C_5$)-Monocarbonsäuren, einfach ethylenisch ungesättigten ($C_4$-$C_6$)-Dicarbonsäuren oder deren Halbester mit aliphatischen ($C_1$-$C_8$)-Alkoholen oder Gemischen dieser Monomeren, vorzugsweise Methacrylsäure, Acrylsäure, Crotonsäure, Maleinsäure, Fumarsäure, Malein- oder Fumarsäuremonoalkylester, Itaconsäure oder deren Gemische

**7.** Verfahren gemäß Anspruch 5, dadurch gekennzeichnet, daß sich die Einheiten (g) ableiten von Umsetzungsprodukten aus Isocyanatoethyl(meth)acrylat, oder m-Isocyanatoisopropyl-$\alpha$-methylstyrol mit einwertigen Alkoholen.

**8.** Verfahren gemäß Anspruch 5, dadurch gekennzeichnet, daß sich die Einheiten (i) ableiten von Diallylmaleinat, Divinylbenzol, Diallylphthalat, Butandioldi(meth)acrylat oder Tetraallyloxyethan.

**9.** Verfahren gemäß mindestens einem der Ansprüche 1 bis 8, dadurch gekennzeichnet, daß daß die Menge an (a) 0 bis 30 Gew.-%, vorzugsweise 0 bis 10 Gew.-%, die Menge an (b) 0 bis 20 Gew.-%, vorzugsweise 0 bis 8 Gew.-%, die Menge an (c) 0 bis 30 Gew.-%, vorzugsweise 0 bis 10 Gew.-%, wobei die Menge an dieser drei Einheiten von Null verschieden sein muß, die Menge an (d) 1 bis 55 Gew.-%, vorzugsweise 3 bis 30 Gew.-%, die Menge an (e) 30 bis 85 Gew.-%, vorzugsweise 30 bis 60 Gew.-%, die Menge an (f) 0 bis 30 Gew.-%, vorzugsweise 0 bis 10 Gew.-%, die Menge an (g) 0 bis 60 Gew.-%, vorzugsweise 0 bis 20 Gew.-%, die Menge an (h) 0 bis 40 Gew.-%, vorzugsweise 0 bis 35 Gew.-%, die Menge an (i) 0 bis 20 Gew.-%, vorzugsweise 0 bis 10 Gew.-% , wobei die Gesamtmenge an (b) und (h) 20 Gew.-%, vorzugsweise 10 Gew.-% nicht übersteigt, und die Menge an (j) 0 bis 5 Gew.-%, vorzugsweise 0 bis 3 Gew.-% betragen, wobei sich diese Prozentangaben jeweils auf das Copolymerisat beziehen.

**10.** Wäßriges System, enthaltend die Copolymerisate, hergestellt nach mindestens einem der Ansprüche 1 bis 9.

**11.** Wäßriges System nach Anspruch 10, dadurch gekennzeichnet, daß die Carboxylgruppen des Copolymerisates teilweise oder vollständig neutralisiert sind.

**12.** Wäßriges System nach Anspruch 10 und/oder 11, dadurch gekennzeichnet, daß es sich hierbei um eine Lackzubereitung handelt.

## Claims

## Claims for the following Contracting States : AT, BE, CH, DE, FR, GB, IT, LI, NL, SE

1. A copolymer containing carboxyl groups and having a thickener action in aqueous systems which has an acid number of at least 43 mg KOH/g and, in addition to units derived from monomers containing carboxyl groups, also contains at least one unit derived from nonionic monomers, optionally containing surface-active groups, and optionally from crosslinking monomers, wherein the monomers containing nonionic, surface-active groups are selected from the mono-olefinically unsaturated (macro)monomers a), containing urethane groups, of the formula (I)

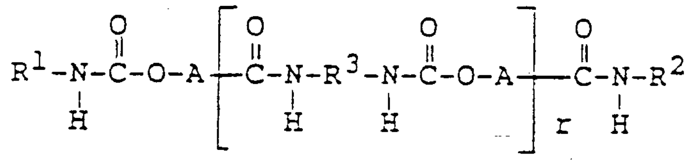

(I)

in which

R[1] and R[2], independently of one another, are saturated hydrocarbon radicals having 3 to 25 carbon atoms and optionally also containing hetero atoms or groups containing hetero atoms, or are monoethylenically unsaturated hydrocarbon radicals having up to 15 carbon atoms and optionally containing hetero atoms or groups containing hetero atoms, with the proviso that one of the two radicals R[1] and R[2] is monoethylenically unsaturated,

R[3] is a divalent, saturated hydrocarbon radical having 1 to 30 carbon atoms and optionally containing hetero atoms or groups containing hetero atoms,

A is the

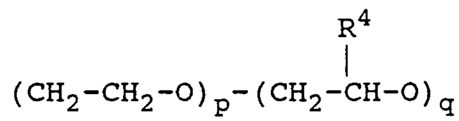

radical in which R[4] is $(C_1\text{-}C_6)$-alkyl, and p is a number from 2 to 300, q is a number from 0 to 300, and

r is a number from 0 to 10,

and polyolefinically unsaturated and crosslinking (macro)monomers b), containing urethane groups, of the formula (II)

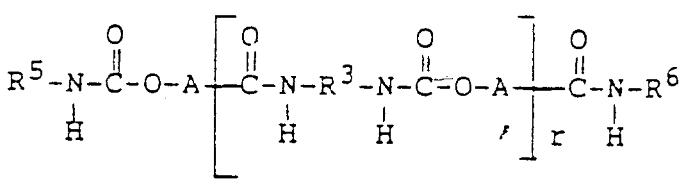

(II)

in which R[3], A and r are as defined above under the formula (I), and

R[5] and R[6], independently of one another, are each a monoethylenically unsaturated hydrocarbon radical having 3 to 15 carbon atoms and optionally containing hetero atoms or groups containing hetero atoms,

and

nonionic monomers c) which are free of surface-active groups and are urethane groups of the formula (III)

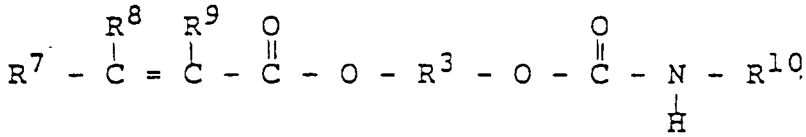 (III)

in which

- $R^3$ is as defineed under the formula (I),
- $R^7$, $R^8$, $R^9$, independently of one another, are hydrogen or $(C_1-C_6)$-alkyl, and
- $R^{10}$ is an aliphatic or cycloaliphatic radical having 3 to 25 carbon atoms, an aryl radical having 6 to 12 carbon atoms, or an arylalkyl radical having 7 to 20 carbon atoms.

**2.** A copolymer as claimed in claim 1, wherein the acid number is between 43 and 180 mg KOH/g and the viscosity (30 % strength aqueous dispersion: 20 °C, pH 2) is between 1.5 to 100 mPas.

**3.** A copolymer as claimed in claim 1 and/or 2, wherein, in the formulae (I) and/or (II) $R^3$ is an alkylene radical having 1 to 25 carbon atoms, an arylene radical having 6 to 12 carbon atoms or an arylalkylidene radical having 6 to 30 carbon atoms, $R^4$ in the radical A is methyl, p is a number from 10 to 100 and q is a number from 0 to 10.

**4.** A copolymer as claimed in at least one of claims 1 to 3, wherein, in the formula (I), one of the two radicals $R^1$ and $R^2$ is alkyl having 3 to 25 carbon atoms and the other radical has the formula (IV) or (V)

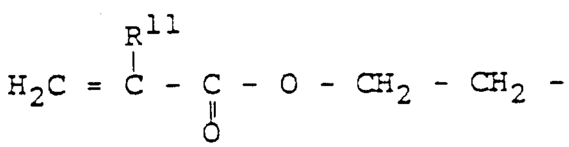 (IV)

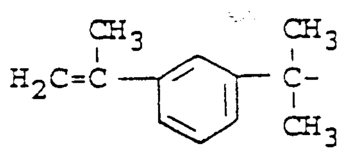 (V)

where, in the formula (IV), $R^{11}$ is hydrogen or a $(C_1-C_6)$-alkyl radical, preferably a methyl radical.

**5.** A copolymer as claimed in at least one of claims 1 to 4, containing, in addition to the units (a), (b) and/or (c),

(d) units derived from monoethylenically unsaturated monomers containing at least one carboxyl group and having from 3 to 14 carbon atoms,

(e) units derived from esters of monoethylenically unsaturated carboxylic acids, preferably monocarboxylic acids, with $(C_1-C_{25})$-alcohols, preferably $(C_1-C_8)$-alcohols,

(f) surface-active $\alpha,\beta$-ethylenically unsaturated carboxylic acid ester of the general formula (VI)

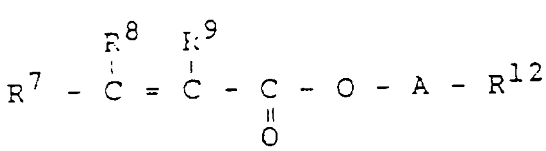 (VI)

in which

A, $R^7$, $R^8$ and $R^9$ are as defined under the formula (I), and

$R^{12}$ is hydrogen or a hydrocarbon radical having 1 to 30 carbon atoms and optionally also containing hetero atoms or groups containing hetero atoms, preferably a ($C_2$-$C_{20}$)-alkyl radical, which may optionally be partially or fully fluorinated, a phenyl radical or a ($C_7$-$C_{42}$)-alkylphenyl radical,

(g) if desired units derived from monoethylenically unsaturated monomers containing urethane groups, other than (a) and (c),

(h) if desired units derived from other monoethylenically unsaturated monomers, other than (a) and (c) to (f), preferably vinyl esters, vinylaromatic compounds, unsaturated nitriles, unsaturated sulfonic acids or derivatives thereof,

(i) if desired units derived from polyethylenically unsaturated compounds, other than (b), and

(j) if desired units derived from molecular weight regulators.

**6.** A copolymer as claimed in claim 5, wherein units (d) are derived from monoethylenically unsaturated ($C_3$-$C_5$)-monocarboxylic acids, monoethylenically unsaturated ($C_4$-$C_6$)-dicarboxylic acids or monoesters thereof with aliphatic ($C_1$-$C_8$)-alcohols, or mixtures of these monomers, preferably methacrylic acid, acrylic acid, crotonic acid, maleic acid, fumaric acid, monoalkyl maleate or fumarate, itaconic acid or mixtures thereof.

**7.** A copolymer as claimed in claim 5, wherein units (g) are derived from products of the reaction of isocyanatoethyl (meth)acrylate or m-isocyanatoisopropyl-$\alpha$-methylstyrene with monohydric alcohols.

**8.** A copolymer as claimed in claim 5, wherein units (i) are derived from diallyl maleate, divinylbenzene, diallyl phthalate, butanediol di(meth)acrylate or tetraallyloxyethane.

**9.** A copolymer as claimed in at least one of claims 1 to 8, wherein the amount of (a) is 0 to 30 % by weight, preferably from 0 to 10 % by weight, the amount of (b) is 0 to 20 % by weight, preferably from 0 to 8 % by weight, the amount of (c) is 0 to 30 % by weight, preferably from 0 to 10 % by weight, where the amount of one of these three units must not be zero, the amount of (d) is 1 to 55 % by weight, preferably from 3 to 30 % by weight, the amount of (e) is 30 to 85 % by weight, preferably from 30 to 60 % by weight, the amount of (f) is 0 to 30 % by weight, preferably from 0 to 10 % by weight, the amount of (g) is 0 to 60 % by weight, preferably from 0 to 20 % by weight, the amount of (h) is 0 to 40 % by weight, preferably from 0 to 35 % by weight, the amount of (i) is 0 to 20 % by weight, preferably from 0 to 10 % by weight, where the total amount of (b) and (h) must not exceed 20 % by weight, preferably 10 % by weight, and the amount of (j) is 0 to 5 % by weight, preferably from 0 to 3 % by weight, these percentages in each case being based on the copolymer.

**10.** A process for the preparation of a copolymer as claimed in at least one of claims 1 to 9, by free radical-initiated emulsion or solution copolymerization, preferably emulsion copolymerization, of unsaturated, copolymerizable monomers d) containing carboxyl groups, if desired in the presence of molecular weight regulators, and if desired with subsequent partial or complete neutralization of the free acid groups of the copolymer by addition of bases, wherein the monomers employed are at least one from the group comprising (a) to (c) and in addition, if desired, (d) to (i).

**11.** An aqueous system containing a copolymer as claimed in at least one of claims 1 to 9.

**12.** An aqueous system as claimed in claim 11, wherein some or all of the carboxyl groups of the copolymer have been neutralized.

**13.** An aqueous system as claimed in claim 11 and/or 12, in the form of a paint formulation.

**Claims for the following Contracting State : ES**

**1.** A process for the manufacture of a copolymer containing carboxyl groups and having a thickener action in aqueous systems which has an acid number of at least 43 mg KOH/g, and which, in addition to units derived from monomers containing carboxyl groups also contains at least one unit derived from nonionic monomers, optionally containing surface-active groups, and optionally from crosslinking

monomers, wherein the monomers containing nonionic, surface-active groups are selected from the (macro)monomers a) containing urethane groups, of the formula (I)

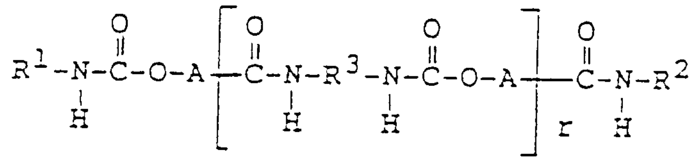

(I)

in which

$R^1$ and $R^2$, independently of one another, are saturated hydrocarbon radicals having 3 to 25 carbon atoms and optionally also containing hetero atoms or groups containing hetero atoms, or are monoethylenically unsaturated hydrocarbon radicals having up to 15 carbon atoms and optionally also containing hetero atoms or groups containing hetero atoms, with the proviso that one of the two radicals $R^1$ or $R^2$ is monoethylenically unsaturated,

$R^3$ is a divalent, saturated hydrocarbon radical having 1 to 30 carbon atoms and optionally containing hetero atoms or groups of hetero atoms

A is the

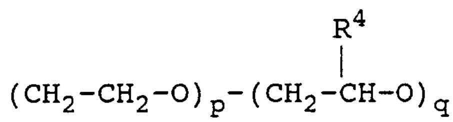

radical in which $R^4$ is $(C_1-C_6)$-alkyl, and p is a number from 2 to 300, q is a number from 0 to 300,

r is a number from 0 to 10,

and polyolefinically unsaturated, crosslinking (macro)monomers b), containing urethane groups, of the formula (II)

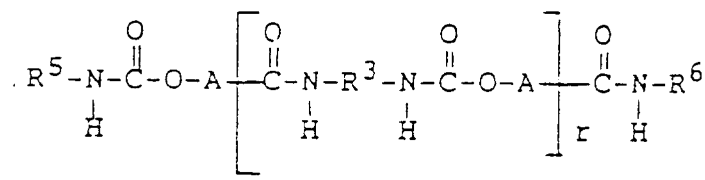

(II)

in which $R^3$, A and r are as defined under the formula (I), and

$R^5$ and $R^6$, independently of one another, are each a monoethylenically unsaturated hydrocarbon radical having 3 to 15 carbon atoms and optionally containing hetero atoms or groups containing hetero atoms

and

nonionic monomers c) which are free of surface-active groups and are urethane groups of the formula (III)

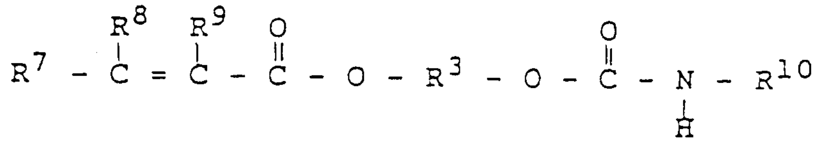

(III)

in which

$R^3$ is as defineed under the formula (I)

$R^7$, $R^8$, $R^9$ , independently of one another, are hydrogen or $(C_1-C_6)$-alkyl, and

$R^{10}$ is an aliphatic or cycloaliphatic radical having 3 to 25 carbon atoms, and aryl radical having 6 to 12 carbon atoms or an arylalkyl radical having 7 to 20 carbon atoms

with the monomers being polymerized by radical-initiated emulsion or solution copolymerization, preferably emulsion copolymerization, optionally in the presence of molecular weight regulators, and, if desired, with subsequent partial or complete neutralization of the free acid groups of the copolymer by addition of bases.

**2.** A process as claimed in claim 1 for the production of a copolymer having an acid number between 43 and 180 mg KOH/g and a viscosity between 1,5 to 100 mPas (30 % strength aqueous dispersion, 20 °C, pH 2).

**3.** A process as claimed in claim 1 and/or 2, wherein in formula (I) and/or (II) $R^3$ represents an alkylene radical having 1 to 25 carbon atoms, or an arylene radical having 6 to 12 carbon atoms or an arylalkylidene radical having 6 to 30 carbon atoms, $R^4$ in the radical A is methyl, p is a number from 10 to 100 and q is a number from 0 to 10.

**4.** A process as claimed in at least one of claims 1 to 3, wherein, in the formula (I), one of the two radicals $R^1$ and $R^2$ is alkyl having 3 to 25 carbon atoms and the other radical has the formula (IV) or (V)

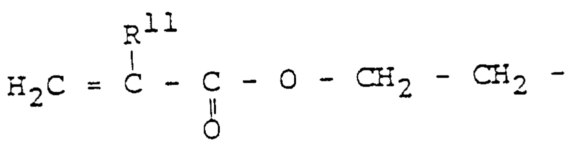

(IV)

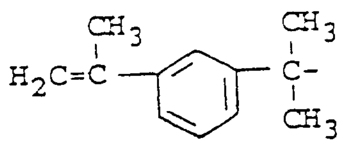

. (V)

where, in the formula (IV) the radical $R^{11}$ is hydrogen or a $(C_1\text{-}C_6)$-alkyl radical, preferably a methyl radical.

**5.** A process as claimed in at least one the claims 1 to 4 for the production of a copolymer which in addition to units (a), (b) and/or (c) also contains

(d) units derived from monoethylenically unsaturated monomers containing at least one carboxyl group with 3 to 14 carbon atoms,

(e) units derived from esters of monoethylenically unsaturated carboxylic acids, preferably monocarboxylic acids, with $(C_1\text{-}C_{25})$-alcohols, preferably $(C_1\text{-}C_8)$-alcohols,

(f) surface-active $\alpha$, $\beta$-ethylenically unsaturated carboxylic acid esters of the formula (VI)

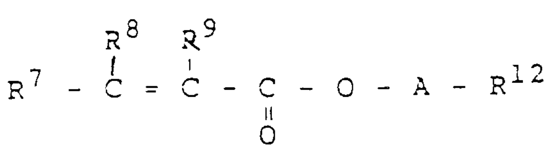

(VI)

in which

A, $R^7$, $R^8$ and $R^9$ are as defined under the formula (I),

and

$R^{12}$ is hydrogen or a hydrocarbon radical having 1 to 30 carbon atoms and optionally also containing hetero atoms or groups containing hetero atoms, preferably a $(C_2\text{-}C_{20})$-alkyl radical, which may optionally be partially or completely fluroinated, a phenyl radical or a $(C_7\text{-}C_{42})$-alkylphenyl radical,

(g) if desired units derived from monoethylenically unsaturated monomers, containing urethane groups, other than (a) or (c),

(h) if desired units derived from other monoethylenically unsaturated monomers, other than (a) and (c) to (f), preferably vinyl esters, vinylaromatic compounds, unsaturated nitriles, unsaturated sulfonic acids or derivatives thereof,

(i) if desired units derived from polyethylenically unsaturated compounds, other than (b) and

(j) if desired units derived from molecular weight regulators.

**6.** A process as claimed in claim 5, wherein units (d) are derived from monoethylenically unsaturated ($C_3$-$C_5$)-monocarboxylic acids, monoethylenically unsaturated ($C_4$-$C_6$)-dicarboxylic acids or monoesters thereof with aliphatic ($C_1$-$C_8$)-alcohols, or with mixtures of these monomers, preferably methacrylic acid, acrylic acid, crotonic acid, maleic acid, furmaric acid, monoalkyl maleate or fumarate, itaconic acid or mixtures thereof.

**7.** A process as claimed in claim 5, wherein units (g) are derived from the products of the reaction of isocyanatoethyl (meth)acrylate or m-isocyanatoisopropyl-$\alpha$-methylstyrene having monohydric alcohols.

**8.** A process as claimed in claim 5, wherein units (i) are derived from diallyl maleate, divinyl benzene, diallyl phthalate, butanediol di(meth)acrylate or tetraallyloxyethane.

**9.** A process as claimed in at least one of claims 1 to 8, wherein the amount of (a) is 0 to 30 % by weight, preferably 0 to 10 % by weight, the amount of (b) is 0 to 20 % by weight, preferably 0 to 8 % by weight, the amount of (c) is 0 to 30 % by weight, preferably 0 to 10 by weight, where the amount of these three units must not be zero, the amount of (d) is 1 to 55 % by weight, preferably 3 to 30 % by weight, the amount of (e) is 30 to 85 % by weight, preferably 30 to 60 % by weight, the amount of (f) is 0 to 30 % by weight, preferably 0 to 10 % by weight, the amount of (g) is 0 to 60 % by weight, preferably 0 to 20 % by weight, the amount of (h) is 0 to 40 % by weight, preferably 0 to 35 % by weight, the amount of (i) is 0 to 20 % by weight, preferably 0 to 10 % by weight, where the total amount of (b) and (h) must not exceed 20 % by weight, preferably 10 % by weight, and the amount of (j) is 0 to 5 % by weight, preferably 0 to 3 % by weight, these percentages in each case referring to the copolymer.

**10.** An aqueous system containing a copolymer produced according to at least one of claims 1 to 9.

**11.** An aqueous system as claimed in claim 10, wherein the carboxylic groups of the copolymer have partially or completely been neutralized.

**12.** An aqueous system as claimed in claim 10 and/or 11 in the form of a paint formulation.

## Revendications

**Revendications pour les Etats contractants suivants : AT, BE, CH, DE, FR, GB, IT, LI, NL, SE**

**1.** Copolymère contenant des groupes carboxyles ayant un effet épaississant dans des systèmes aqueux, qui présente un indice d'acide d'au moins 43 mg KOH/g, et qui, outre les motifs qui dérivent de monomères présentant des groupes carboxyles, contient aussi au moins un motif qui dérive de monomères non-ioniques, contenant éventuellement des groupes tensio-actifs, ainsi que éventuellement des monomères réticulants, caractérisé en ce que :

- les monomères non-ioniques, contenant éventuellement des groupes tensio-actifs, sont pris dans le groupe des macromonomères (a) à simple insaturation oléfinique, contenant des groupes uréthannes, de formule générale (I) :

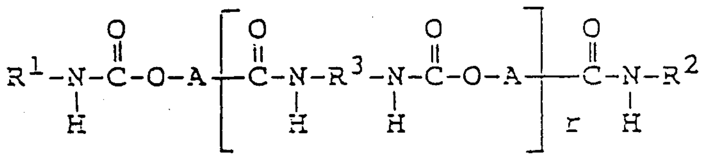

(I)

dans laquelle

$R^1$ et $R^2$, indépendamment l'un de l'autre, représentent un radical hydrocarboné saturé avec 3 à 25 atomes de carbone, qui peut éventuellement contenir aussi des hétéroatomes ou des groupes comportant des hétéroatomes, ou un radical hydrocarboné à simple insaturation éthylénique avec jusqu'à 15 atomes de carbone, qui peut contenir des hétéroatomes ou des groupes comportant des hétéroatomes, à la condition que l'un des deux radicaux $R^1$ ou $R^2$ comporte une insuration éthylénique simple,

$R^3$ représente un radical hydrocarboné saturé, bivalent, avec 1 à 30 atomes de carbone, qui peut éventuellement comporter des hétéroatomes ou des groupes comportant des hétéroatomes

A représente le radical

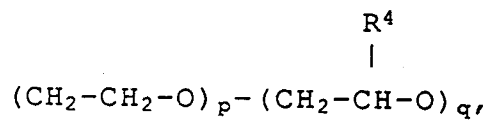

dans laquelle les radicaux $R^4$ représentent un alkyle en $C_1$-$C_6$ et p représente un nombre de 2 à 300, q représente un nombre de 0 à 300,

r représente un nombre de 0 à 10,

et des macromonomères (b) réticulant, à plusieurs insaturations oléfiniques, contenant des groupes uréthannes, de formule générale (II) :

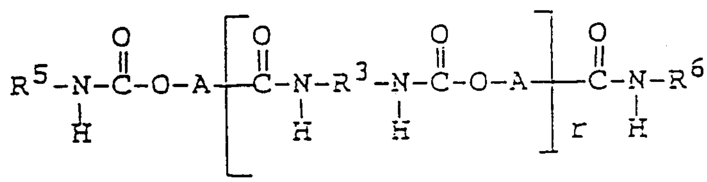

(II)

dans laquelle $R^3$, A et r ont la signification donnée précédemment selon la formule (I) et

$R^5$ et $R^6$, indépendamment l'un de l'autre, représentent chacun un radical hydrocarboné à simple insaturation éthylénique avec 3 à 15 atomes de carbone, qui peut comporter des hétéroatomes ou des groupes comportant des hétéroatomes,

et des monomères (c) non ioniques, qui sont dépourvus de groupes tension-actifs, ainsi que les monomères, contenant des groupes uréthannes, de formule (III) sont :

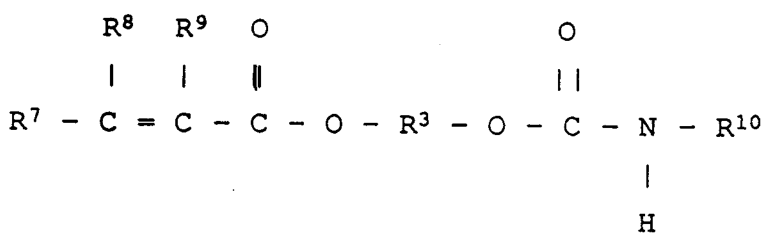

(III)

dans laquelle

$R^3$ a la même signification que dans la formule (I),

$R^7$, $R^8$, $R^9$, indépendamment l'un de l'autre, représentent l'hydrogène ou alkyle en $C_1$-$C_6$, et

$R^{10}$ représente un radical aliphatique ou cycloaliphatique avec 3 à 25 atomes de carbone, un radical aryle avec 6 à 12 atomes de carbone, ou un radical arylalkyle avec 7 à 20 atomes de carbone.

**2.** Copolymère selon la revendication 1, caractérisé en ce que l'indice d'acide est compris entre 43 et 180 mg KOH/g et la viscosité (dispersion aqueuse à 30 % ; 20 °C ; pH 2) est comprise entre 1,5 et 100 mPas.

**3.** Copolymère selon la revendication 1 et/ou 2, caractérisé en ce que dans les formules (I) et/ou (II) $R^3$ représente un radical alkylène avec 1 à 25 atomes de carbone, ou un radical arylène avec 6 à 12 atomes de carbone ou un radical arylalkylidène avec 6 à 30 atomes de carbone, $R^4$ dans le radical A représente méthyle, p représente un nombre de 10 à 100 et q représente un nombre de 0 à 10.

**4.** Copolymère selon au moins l'une des revendications 1 à 3, caractérisé en ce que dans la formule (I) l'un des deux radicaux $R^1$ ou $R^2$ représente un radical alkyle avec 3 à 25 atomes de carbone et l'autre répond aux formules générales (IV) ou (V) :

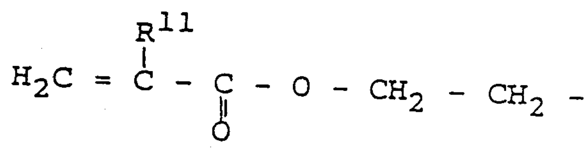
(IV)

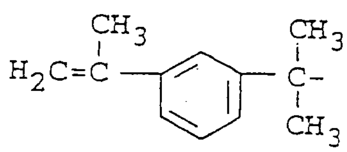
(V)

dans la formule (IV), le radical $R^{11}$ représentant l'hydrogène ou un radical alkyle en $C_1$-$C_6$, de préférence un radical méthyle.

**5.** Copolymère selon au moins l'une des revendications 1 à 4, caractérisé en ce qu'il contient outre les unités (a), (b) et/ou (c)

(d) des motifs qui dérivent des monomères à insaturation éthylénique simple avec au moins un groupe carboxyle avec 3 à 14 atomes de carbone,

(e) des motifs qui dérivent des esters d'acides carboxyliques à simple insaturation éthylénique, de préférence des acides monocarboxyliques avec des alcools en $C_1$ - $C_{25}$, de préférence des alcools en $C_1$-$C_8$,

(f) des esters d'acides carboxyliques tensio-actifs à insaturation $\alpha,\beta$-éthylénique, de formule générale (VI) :

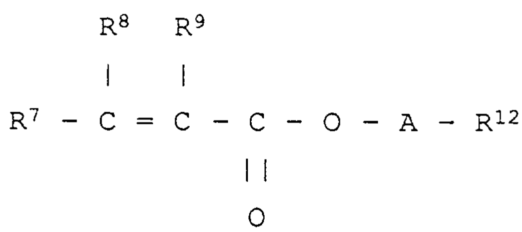
(VI)

dans laquelle

A ainsi que $R^7$, $R^8$ et $R^9$ ont la même signification que dans la formule (I), et

$R^{12}$ représente l'hydrogène ou un radical hydrocarboné avec 1 à 30 atomes de carbone, qui peut aussi contenir des hétéroatomes ou des groupes comportant des hétéroatomes, de préférence un radical alkyle en $C_2$-$C_{20}$ qui peut être éventuellement partiellement ou entièrement fluoré, un radical phényle ou un radical alkylphényle en $C_7$-$C_{42}$,

(g) éventuellement des motifs qui dérivent des monomères, contenant des groupes uréthannes, à simple insaturation éthylénique, qui sont différents de (a) ou (c),

(h) éventuellement des motifs qui dérivent des autres monomères à simple insaturation éthylénique, différents de (a) ainsi que de (c) à (f), de préférence des esters vinyliques, des composés vinylaromatiques, des nitriles insaturés, des acides sulfoniques insaturés ou leurs dérivés,

(i) éventuellement des motifs qui dérivent des composés à plusieurs insaturations éthyléniques, différents de (b) et

(j) éventuellement des motifs qui dérivent des régulateurs de poids moléculaire.

**6.** Copolymère selon la revendication 5, caractérisé en ce que les motifs (d) dérivent des acides monocarboxyliques en $C_3$-$C_5$ à insaturation éthylénique simple, des acides dicarboxyliques en $C_4$-$C_6$ à simple insaturation éthylénique ou de leurs hémi-esters avec des alcools aliphatiques en $C_1$-$C_8$ ou des mélanges de ces monomères, de préférence de l'acide méthacrylique, l'acide acrylique, l'acide crotonique, l'acide maléique, l'acide fumarique, les monoesters alkyliques de l'acide maléique ou de l'acide fumarique, de l'acide itaconique, ou leurs mélanges.

**7.** Copolymère selon la revendication 5, caractérisé en ce que les motifs (g) dérivent des produits de réaction du (méth)acrylate d'isocyanatoéthyle ou du m-isocyanatoisopropyl-$\alpha$-méthylstyrène avec des alcools monovalents.

**8.** Copolymère selon la revendication 5, caractérisé en ce que les motifs (i) dérivent du maléinate de diallyle, du divinylbenzène, du phtalate de diallyle, du di(méth)acrylate de butanediol ou de tétraallyloxyéthane.

**9.** Copolymère selon au moins l'une des revendications 1 à 8, caractérisé en ce que la quantité en (a) est de 0 à 30 % en poids, de préférence de 0 à 10 % en poids, la quantité en (b) de 0 à 20 % en poids, de préférence de 0 à 8 % en poids, la quantité en (c) de 0 à 30 % en poids, de préférence de 0 à 10 % en poids, la quantité de l'un de ces trois motifs devant être différente de 0, la quantité en (d) de 1 à 55 % en poids, de préférence de 3 à 30 % en poids, la quantité en (e) de 30 à 85 % en poids, de préférence de 30 à 60 % en poids, la quantité en (f) de 0 à 30 % en poids, de préférence de 0 à 10 % en poids, la quantité pour (g) de 0 à 60 % en poids, de préférence de 0 à 20 % en poids, la quantité en (h) de 0 à 40 % en poids, de préférence de 0 à 35 % en poids, la quantité en (i) de 0 à 20 % en poids, de préférence de 0 à 10 % en poids, la quantité totale en (b) et (h) n'étant pas supérieure à 20 % en poids, de préférence à 10 % en poids, et la quantité en (j) de 0 à 5 % en poids, de préférence de 0 à 3 % en poids, les indications en pourcentages étant relatives chaque fois au copolymères.

**10.** Procédé pour la préparation des copolymères selon au moins l'une des revendications 1 à 9, par copolymérisation en émulsion ou en solution à amorce radicalaire, de préférence par copolymérisation en émulsion, de monomères (d) insaturés, contenant des groupes carboxyles copolymérisables, éventuellement en présence de régulateurs de poids moléculaire, ainsi qu'éventuellement par neutralisation ultérieure partielle ou complète des groupes acides libres du copolymère par addition de bases, caractérisé en ce qu'on utilise en tant que monomère au moins un pris dans le groupe de (a) à (c), ainsi que, de plus, éventuellement de (e) à (i).

**11.** Système aqueux contenant les copolymères selon au moins l'une des revendications 1 à 9.

**12.** Système aqueux selon la revendication 11, caractérisé en ce que les groupes carboxyles du copolymère sont partiellement ou entièrement neutralisés.

**13.** Système aqueux selon la revendication 11 et/ou 12, caractérisé en ce qu'il s'agit dans ce cas d'une préparation de vernis.

**Revendications pour l'Etat contractant suivant : ES**

**1.** Procédé pour la préparation d'un copolymère contenant des groupes carboxyles ayant un effet épaississant dans des systèmes aqueux, qui présente un indice d'acide d'au moins 43 mg KOH/g, et qui outre les motifs qui dérivent des monomères présentant des groupes carboxyle, contient aussi au moins un motif qui dérive des monomères non-ioniques contenant éventuellement des groupes tensio-actifs ainsi que éventuellement des monomères réticulants, caractérisé en ce que les monomères non-ioniques contenant éventuellement des groupes tensio-actifs sont pris dans le groupe des macromonomères (a), contenant des groupes uréthannes, de formule générale (I) :

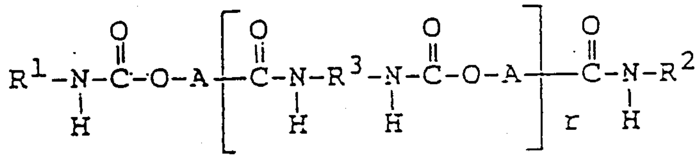

(I)

dans laquelle

$R^1$ et $R^2$, indépendamment l'un de l'autre, représentent un radical hydrocarboné saturé avec 3 à 25 atomes de carbone, qui peut éventuellement contenir aussi des hétéroatomes ou des groupes comportant des hétéroatomes ou un radical hydrocarboné à simple insaturation éthylénique avec jusqu'à 15 atomes de carbone, qui peut contenir des hétéroatomes ou des groupes comportant des hétéroatomes, à la condition que l'un des deux radicaux $R^1$ ou $R^2$ comporte une simple insuration éthylénique,

$R^3$ représente un radical hydrocarboné saturé, bivalent, avec 1 à 30 atomes de carbone, qui peut éventuellement comporter des hétéroatomes ou des groupes comportant des hétéroatomes,

A représente le radical

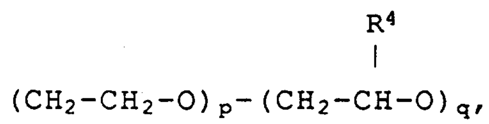

dans laquelle $R^4$ représente un alkyle en $C_1$-$C_6$ et p représente un nombre de 2 à 300, et q représente un nombre de 0 à 300,

r représente un nombre de 0 à 10,

et des macromonomères (b) réticulants, à plusieurs insaturations oléfiniques, contenant des groupes uréthannes, de formule générale (II) :

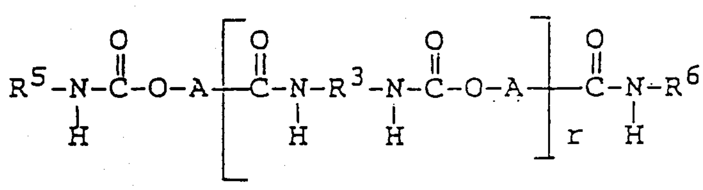

(II)

dans laquelle $R^3$, A et r ont la signification donnée précédemment selon la formule (I) et

$R^5$ et $R^6$, indépendamment l'un de l'autre, représentent chacun un radical hydrocarboné à simple insaturation éthylénique avec 3 à 15 atomes de carbone, qui peut contenir des hétéroatomes ou des groupes comportant des hétéroatomes, et des monomères (c) non ioniques, qui sont dépourvus de groupes tensio-actifs, et les monomères, contenant des groupes uréthannes, de formule générale (III) :

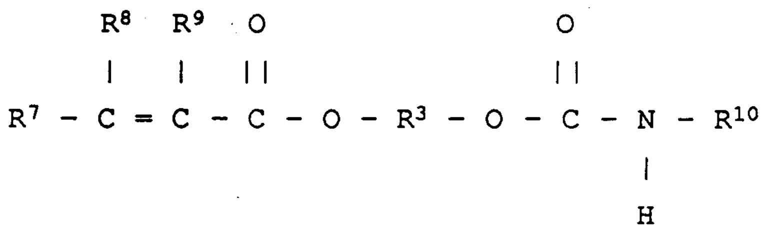 (III)

dans laquelle

- $R^3$ a la même signification que dans la formule (I),
- $R^7$, $R^8$, $R^9$, indépendamment l'un de l'autre, représentent l'hydrogène ou alkyle en $C_1$-$C_6$, et
- $R^{10}$ représente un radical aliphatique ou cycloaliphatique avec 3 à 25, atomes de carbone, et un radical aryle avec 6 à 12 atomes de carbone ou un radical arylalkyle avec 7 à 20 atomes de carbone,

et qu'on polymérise les monomères par copolymérisation en émulsion ou en solution à amorce radicalaire, de préférence par copolymérisation en émulsion, éventuellement en présence de régulateurs de poids moléculaire, ainsi qu'éventuellement en neutralisant ultérieure partielle ou complète des groupes acides libres du copolymère par addition de bases.

**2.** Procédé selon la revendication 1, caractérisé en ce qu'on prépare un copolymère dont l'indice d'acide est compris entre 43 et 180 mg KOH/g et dont la viscosité (dispersion aqueuse à 30 % ; 20 °C ; pH 2) est comprise entre 1,5 et 100 mPas.

**3.** Procédé selon la revendication 1 et/ou 2, caractérisé en ce que dans les formules (I) et/ou (II), $R^3$ représente un radical alkylène avec 1 à 25 atomes de carbone, ou un radical arylène avec 6 à 12 atomes de carbone ou un radical arylalkylidène avec 6 à 30 atomes de carbone, $R^4$ dans le radical A représente le méthyle, p représente un nombre de 10 à 100 et q représente un nombre de 0 à 10.

**4.** Procédé selon au moins l'une des revendications 1 à 3, caractérisé en ce que dans la formule (I) l'un des deux radicaux $R^1$ ou $R^2$ représente un radical alkyle avec 3 à 25 atomes de carbone et l'autre répond aux formules générales (IV) ou (V) :

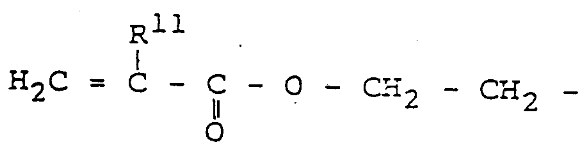 (IV)

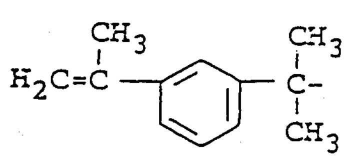 (V)

dans la formule (IV), le radical $R^{11}$ représentant l'hydrogène ou un radical alkyle en $C_1$-$C_6$, de préférence un radical méthyle.

**5.** Procédé selon au moins l'une des revendications 1 à 4, caractérisé en ce qu'on prépare un copolymère qui, outre les motifs (a), (b) et/ou (c), contient encore

(d) des motifs qui dérivent des monomères à simple insaturation éthylénique avec au moins un groupe carboxyle et 3 à 14 atomes de carbone,

(e) des motifs qui dérivent des esters d'acides carboxyliques à simple insaturation éthylénique, de préférence des acides monocarboxyliques avec des alcools en $C_1$ - $C_{25}$, de préférence des alcools en $C_1$-$C_8$,

(f) des esters d'acides carboxyliques à insaturation $\alpha,\beta$-éthylénique de formule générale (VI) :

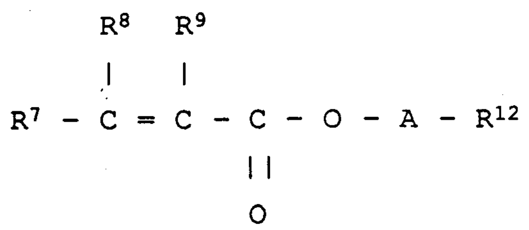

(VI)

dans laquelle

A ainsi que $R^7$, $R^8$ et $R^9$ ont la même signification que dans la formule (I), et

$R^{12}$ représente l'hydrogène ou un radical hydrocarboné avec 1 à 30 atomes de carbone, qui peut aussi contenir des hétéroatomes ou des groupes comportant des hétéroatomes, de préférence un radical alkyle en $C_2$-$C_{20}$ qui peut être éventuellement partiellement ou entièrement fluoré, un radical phényle ou un radical alkylphényle en $C_7$-$C_{42}$,

(g) éventuellement des motifs qui dérivent des monomères, contenant des groupes uréthannes, à insaturation éthylénique simple, qui sont différents de (a) ou de (c),

(h) éventuellement des motifs qui dérivent des autres monomères à simple insaturation éthylénique, différents de (a) ainsi que de (c) à (f) , de préférence des esters vinyliques, des composés vinylaromatiques, des nitriles insaturés, des acides sulfoniques insaturés ou de leurs dérivés,

(i) éventuellement des motifs qui dérivent des composés à plusieurs insaturations éthyléniques, différents de (b) et

(j) éventuellement des motifs qui dérivent des régulateurs de poids moléculaire.

**6.** Procédé selon la revendication 5, caractérisé en ce que les motifs (d) dérivent des acides monocarboxyliques en $C_3$-$C_5$ à simple insaturation éthylénique, des acides dicarboxyliques en $C_4$-$C_6$ à simple insaturation éthylénique ou de leurs hémi-esters avec des alcools aliphatiques en $C_1$-$C_8$ ou des mélanges de ces monomères, de préférence de l'acide méthacrylique, de l'acide acrylique, de l'acide crotonique, de l'acide maléique, de l'acide fumarique, des monoesters alkyliques de l'acide maléique ou de l'acide fumarique, de l'acide itaconique ou de leurs mélanges.

**7.** Procédé selon la revendication 5, caractérisé en ce que les motifs (g) dérivent des produits de réaction du méthacrylate d'isocyanatoéthyle ou du m-isocyanatoisopropyl-$\alpha$-méthylstyrène avec des alcools monovalents.

**8.** Procédé selon la revendication 5, caractérisé en ce que les motifs (i) dérivent du maléinate de diallyle, du divinylbenzène, du phtalate de diallyle, du diméthacrylate de butanediol ou de tétraallyloxyéthane.

**9.** Procédé selon au moins l'une des revendications 1 à 8, caractérisé en ce que la quantité pour (a) est de 0 à 30 % en poids, de préférence de 0 à 10 % en poids, la quantité pour (b) de 0 à 20 % en poids, de préférence de 0 à 8 % en poids, la quantité (c) de 0 à 30 % en poids, de préférence de 0 à 10 % en poids, la quantité de l'un de ces trois motifs devant être différente de 0, la quantité pour (d) de 1 à 55 % en poids, de préférence de 3 à 30 % en poids, la quantité pour (e) de 30 à 85 % en poids, de préférence de 30 à 60 % en poids, la quantité pour (f) de 0 à 30 % en poids, de préférence de 0 à 10 % en poids, la quantité pour (g) de 0 à 60 % en poids, de préférence de 0 à 20 % en poids, la quantité pour (h) de 0 à 40 % en poids, de préférence de 0 à 35 % en poids, la quantité pour (i) de 0 à 20 % en poids, de préférence de 0 à 10 % en poids, la quantité totale pour (b) et (h) n'étant pas supérieure à 20 % en poids, de préférence à 10 % en poids, et la quantité pour (j) de 0 à 5 % en poids, de préférence de 0 à 3 % en poids, les indications en pourcentages étant relatives aux copolymères respectifs.

**10.** Système aqueux contenant les copolymères selon au moins l'une des revendications 1 à 9.

**11.** Système aqueux selon la revendication 10, caractérisé en ce que les groupes carboxyle de copolymères sont partiellement ou entièrement neutralisés.

12. Système aqueux selon la revendication 10 et/ou 11, caractérisé en ce qu'il s'agit dans ce cas d'une préparation de vernis.